(19) Europäisches Patentamt

European Patent Office

Office européen des brevets

(11) **EP 1 619 767 A1**

(12) **EUROPÄISCHE PATENTANMELDUNG**

(43) Veröffentlichungstag:
25.01.2006 Patentblatt 2006/04

(51) Int Cl.:
*H02G 1/06* (2006.01)    *G02B 6/44* (2006.01)

(21) Anmeldenummer: 05014845.1

(22) Anmeldetag: 12.11.1996

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 13.11.1995 DE 19542231
28.03.1996 DE 19612457
25.04.1996 DE 19616598
25.04.1996 DE 19616596
25.04.1996 DE 19616595
12.06.1996 DE 19623483
19.08.1996 DE 19633366
30.09.1996 DE 19640290

(62) Dokumentnummer(n) der früheren Anmeldung(en)
nach Art. 76 EPÜ:
01129748.8 / 1 211 772
96945983.3 / 0 861 455

(71) Anmelder: CCS Technology, Inc.
Wilmington, DE 19803 (US)

(72) Erfinder:
• Zeidler, Günter
82110 Germering (DE)
• Finzel, Lothar
85716 Unterschleissheim (DE)
• Kossat, Rainer
83229 Aschau (DE)
• Kunze, Dieter
82061 Neuried (DE)

(74) Vertreter: Epping - Hermann - Fischer
Patentanwaltsgesellschaft mbH
Ridlerstrasse 55
80339 München (DE)

Bemerkungen:
Diese Anmeldung ist am 08 -07 -2005 als
Teilanmeldung zu der unter INID-Kode 62 erwähnten
Anmeldung eingereicht worden.

(54) **Installation mit einem optischen Lichtwellenleiterkabel**

(57) Bei einer Installation mit einem optischen Lichtwellenleiterkabel ist eine Nut (19) in eine Oberfläche mit einer vorgegebenen Breite eingebracht. Ein Kabel ist innerhalb der Nut (19) angeordnet und weist wenigstens einen optischen Lichtwellenleiter innerhalb einer Röhre auf. Ein das Kabel (1) bedeckendes Füllmaterial (43, 44) füllt die Nut (19) zumindest teilweise. Das Füllmaterial umfasst wenigstens teilweise ein solches Material, das zuvor zur Bildung der Nut nicht ausgehoben wurde.

FIG 7

**Beschreibung**

Die Erfindung betrifft eine Installation mit einem optischen Lichtwellenleiterkabel, insbesondere in einem festen Verlegegrund.

Aus der DE-A1-41 15 907 ist ein Kabelpflug zum Verlegen von Kabeln im Erdreich, insbesondere im Grundbereich von Gewässern, bekannt. Hier ist vor dem Pflugschwert des Kabelpfluges ein rotierendes Fräsrad angeordnet, das zusätzlich in vertikale Schwingungen versetzt wird, so daß hiermit auch harte Gegenstände, die sich im Bereich des auszuhebenden Grabens befinden, zerteilt werden können. Mit diesem Kabelpflug werden relativ breite Gräben durch Verdrängung des Erdreiches mit Hilfe des Pflugschwertes ausgehoben. Derartige Vorrichtungen werden insbesondere in küstennahen Bereichen eingesetzt und unter Wasser mit entsprechenden Steuereinrichtungen geführt. Bei Verlegungen im Erdreich wird meist das Material auf einer Breite von 60 bis 100 cm und auf eine Kabelverlegetiefe von ca. 70 cm entfernt, so daß der Verlegeaufwand relativ groß ist.

Weiterhin ist aus der DE-A1-30 01 226 ein Leitungsnetz zum Übertragen von Signalen bekannt, wobei die Signale durch Glasfaserkabel geleitet werden, die in einem Rohr- oder Kanalnetz eines vorhandenen Versorgungssystems verlegt sind. Hier sind jedoch feste Verlegetrassen vorgegeben, bei denen in geeigneter Weise Ein- und Ausführungen für das zu verlegende Kabel vorgesehen werden müssen.

Alternativ hierzu können auf kurze Distanzen auch sogenannte Bohr- oder Spülverfahren eingesetzt werden, bei denen ein Rohr horizontal in das Erdreich eingebracht wird. Nachteilig ist auch hier der hohe Aufwand für Verlegemaschinen und Material.

Die vorliegende Erfindung stellt sich die Aufgabe, eine Installation mit einem optischen Lichtwellenleiterkabel anzugeben, die zur Verlegung in einem festen Verlegegrund geeignet ist.

Eine Installation gemäß der Erfindung ist in Patentanspruch 1 angegeben.

Eine alternative Installation gemäß der Erfindung ist in Patentanspruch 26 angegeben.

Bei der Herstellung der Installation kommt ein Verfahren zur Anwendung, bei dem zum Verlegen nur eine relativ kurze Zeit in Anspruch genommen wird, so daß es besonders dort zur Anwendung kommen wird, wenn lange Behinderungen unerwünscht sind. Dies ist beispielsweise besonders bei der Verlegung von neuen oder zusätzlichen Kabeln der Fall, wenn die Verlegung in verkehrsreichen Gebieten von Städten durchgeführt werden muß. Auf Absperrungen oder Umleitungen soll möglichst verzichtet werden. Die Arbeitsgänge Einfräsen, Verlegen und Versiegeln der Nut können unmittelbar aufeinander folgen, wobei sie zweckmäßigerweise in einem Arbeitsgang von einer Maschinenkombination durchgeführt werden. Auf diese Weise wird die Verkehrsbelastung kaum größer sein als die, die durch eine Kehrmaschine hervorgerufen wird. Eine solche Notwendigkeit ergibt sich beispielsweise auch wenn alle verlegten Röhren, Kabelkanäle oder Rohrzüge mit Kabeln bereits völlig belegt sind, wobei dann auf die neu verlegten Kabel ohne Unterbrechung umgespleißt werden kann. Hierfür eignen sich besonders rohrförmige Kleinstnachrichtenkabel, die als Mikro-oder Minikabel bezeichnet werden. Diese neu verlegten Minikabel bzw. Mikrokabel sind vorzugsweise zu einem redundanten Overlaynetz zu verschalten.

Ein solches Minikabel bzw. Mikrokabel besteht aus einer homogenen und druckwasserdichten Röhre von sehr kleinem Durchmesser von 2,0 bis 10 mm, vorzugsweise 2,2 bis 5,5 mm. Diese Röhren besitzen eine Wandstärke von 0,2 bis 0,4 mm. Die günstigsten Werte bezüglich der Knickfestigkeit werden bei einem Verhältnis von Wandstärke zu Außendurchmesser zwischen $\frac{1}{5}$ und $\frac{1}{20}$, vorzugsweise von ca. $\frac{1}{10}$, erreicht. Der kleinste Innendurchmesser der verwendeten Röhre ist 1,8 mm. Diese Röhre kann aus Metall, zum Beispiel aus Chrom-Nickel-Molybden (CrNiMo188)-Stahl, Aluminiumlegierungen, Kupfer oder Kupferlegierungen oder aus Kunststoff, zum Beispiel mit Verstärkungseinlagen aus Kohle-, Glasfasern oder einem gesinterten Kohlefasergerüst, hergestellt werden. Diese Röhren können extrudiert, geschweißt, gefalzt oder an der Überlappungsstelle längs verklebt werden. Die Lichtwellenleiter werden dann entweder nach dem Verlegen der leeren Röhre oder bereits werksseitig in die Röhre eingebracht. Das Einbringen der Lichtwellenleiter kann durch Einblasen oder Einspülen vorgenommen werden.

Das rohrförmige Minikabel kann durch verschiedene Verfahrensarten in feste Verlegegründe eingebracht werden:

1. Die Verlegung kann mit einer Verlegeeinrichtung vorgenommen werden, die ein Fräsrad aufweist, mit dessen Hilfe eine schmale Verlegenut von 4 bis 12 mm, vorzugsweise 7 mm, Breite und einer Tiefe von 50 bis 100 mm, vorzugsweise 70 mm, in den Verlegegrund insbesondere eine bestehende Fahrbahn, eingefräst wird.

2. Ein solches Minikabel kann auch in aufgelassene Versorgungsleitungen (Abwasser, Gas, Wasser) eingedrückt werden. Aufgelassene Rohrleitungen von Versorgungsunternehmen bieten sich für eine Verlegung besonders an. Sie stimmen weitgehend mit der zu erstellenden Versorgungsnetzplanung überein. Auch bei schlechtem Zustand der aufgelassenen Röhre können die dünnen Metallröhrchen des Minikabels auch eingebracht werden, da sie in Längsrichtung eingepreßt werden und Behinderungen wie Schmutz, Rost und dergleichen durchstoßen. Das Minikabel knickt in Röhren nicht aus, da es von der aufgelassenen Versorgungsleitung gestützt wird. Die Verlegung kann nach Verlassen dieser Rohrleitungen auch mit Hilfe von anderen Verlegeverfahren weiter geführt werden.

3. Ein Minikabel kann ebenso in bestehende, aktive Versorgungsleitungen (Abwasser, Wasser) eingeschoben werden. Die Funktion der Versorgungsleitungen wird dabei kaum beeinträchtigt. Das rohrförmige Minikabel ist druckwasser-, abwasser- und korrosionsbeständig. Nagetierverbiß kann aufgrund der dicken Wandstärke des Metallröhrchens ausgeschlossen werden. Es kann davon ausgegangen werden, daß das zu installierende Lichtwellenleiternetz mit dem vorhandenen Versorgungsnetz übereinstimmt. Die Erdbauarbeiten können dadurch auf ein Minimum reduziert werden. Entsprechende Garnituren, die ein Herausführen des Minikabels aus den Versorgungsleitungen ermöglichen, sind an den entsprechenden Stellen vorzusehen.

4. Durch Erdverdrängungs- oder Einspülverfahren können ebenfalls Minikabel in den Verlegegrund eingebracht werden. Hierbei wird zuerst das Rohr des Minikabels als mechanischer Schutz ins Erdreich eingebracht. Zweckmäßigerweise werden dann nachträglich die Faseradern, bzw. sehr dünne "blown fiber" eingeblasen oder eingespült. Um die Reibung beim Einblasen zu minimieren, werden die nahtlos hergestellten und innen glatten Rohre mit einer Kunststoffschicht, z.B. PTFE, ausgekleidet. Diese Schicht wird beispielsweise aus einer PTFE-Suspension abgeschieden, wenn das Metallrohr entsprechend erhitzt wird. Diese Schicht schützt außerdem vor Korrosion und Verschmutzung des Rohrinnenraumes. Bekannt sind Erdverdrängungs- und Einpreßverfahren bei dem ein Bohrkopf mit einer Anschrägung stetig rotiert. Rotiert der Bohrkopf nicht, wird der Bohrkörper gemäß seiner Anschrägung ausgelenkt. Hindernisse können somit umgangen werden. Durch einen Wasserstrahl mit sehr hohem Druck können beispielsweise kleine Steine weggedrückt werden. Das Rohr bzw. Röhrchen schneidet oder spült sich einen Weg durch das Erdreich und unterstützt den Vorschub des Einpreßverfahrens. Der Wasserdruck kann außerdem einen Kolben im Bohrkörper bewegen. Die stoßförmige Bewegung des Bohrkopfes durchschlägt dann Hindernisse leichter und reduziert die Haftreibung beim Einziehvorgang.

Durch elastisches Dehnen der Rohrleitung kann die Wandreibung zum Erdreich weiter reduziert werden. Dazu müßte ein Auslaßventil am Rohrende angebracht werden.
Durch die Verwendung des röhrchenförmigen Minikabels ergeben sich nun besondere, nachstehende Vorteile. Die Verlegung bzw. der Einsatz erfolgt mit Hilfe eines Hohlrohres, das als Kabel bereits mit Lichtwellenleitern bestückt ist; doch können die Lichtwellenleiter auch erst nachträglich eingezogen werden. Durch entsprechende Wahl der Wanddicke wird ein ausreichender Schutz gegen mechanische Belastung, Korrosion und Nagetierbissen gewährleistet. Außerdem ist eine hohe Querdruckstabilität des Rohres bzw. Röhrchens vorhanden. Bei Verlängerungen und Abdichtungen des Rohres können an sich bekannte Techniken mit Schneidklemmringen oder ein Krimpverfahren eingesetzt werden. Bei Verlängerungen des Röhrchens aus Kupfer ist beispielsweise eine Verbindung durch Kaltpreßschweißen möglich. Im übrigen kann das Rohr wie ein normales Installationsrohr verarbeitet werden, wobei sich diese Techniken auf das Biegen, Anbringen von Fittingen, Abzweigungen und Einführungen in Muffen beziehen. Hierfür eignen sich auch zylinderförmige Metallgarnituren, in die das Minikabel dicht eingeführt werden kann. Bei der Verlegung von der Oberfläche des Erdreichs her wird die Oberfläche nur minimal zerstört, was besonders vorteilhaft bei Verlegung in Straßenzügen ist. Außerdem ist beim Verlegen ein Ziehen und Drücken des Minikabels infolge der Steifigkeit möglich und hilfreich. Infolge des geringen Durchmessers eines derartigen Minikabels ist auch die Erdreichverdrängung besonders gering, wobei die Volumenverdrängung beim Einpressen oder Einziehen ins umgebende Erdreich erfolgen kann.
Ein röhrchenförmiges Mikrokabel bzw. Minikabel eignet sich besonders zur Verlegung in einer Fahrbahn oder in Gehwegen, da der Fahrbahnverbund durch die erforderliche Nut kaum zerstört wird. Es ist lediglich eine 4 bis 12 mm breite Nut mit einer Tiefe von ca. 70 mm erforderlich, um die Sicherheit eines derartigen Kabels zu gewährleisten. Dabei sollten die Nuten zur Aufnahme der Kabel möglichst nur an den Seitenstreifen längs der Straße angebracht werden, da hier die geringste Beanspruchung erfolgt. Die eingebrachte Nut wird nach dem Einbringen des Kabels bzw. des Rohres wieder gefüllt und gegen Eindringen von Oberflächenwasser versiegelt. Bei dieser Versiegelung dürfen keine Hohlräume entstehen, in denen sich Oberflächenwasser sammeln kann. Die Fahrbahndecke kann in einfacher Weise wieder hergestellt werden. Bei Reparaturmaßnahmen ist lediglich darauf zu achten, daß beim Abfräsen der Straßendecke das bereits verlegte Mini- bzw. Mikrokabel nicht beschädigt wird.
Bei einer Verlegung mit einem Mikrokabel und den entsprechenden Verlegeverfahren ergeben sich erhebliche Reduzierungen der Kosten für die Verlegetechnik, so daß sich eine deutliche Reduzierung der linientechnischen Gesamtkosten bei einer Neuinstallation ergeben. Außerdem wird die Betriebssicherheit durch redundante Trassenführung erhöht. Vorteilhaft ist auch, daß aus bisherigen starren, sternförmigen Verzweigungsnetzen ringförmige Netzstrukturen mit verschiedenen Anschlußmöglichkeiten gebildet werden können. Auf diese Weise erhält man eine flexible, intelligente Netzgestaltung, wobei mit Hilfe von optischen Schaltern Mikrokabel zugeschaltet werden können. Somit wäre ein Anschlußfaserring mit optischer Umschaltung möglich, bei der Lichtwellenleiterfasern bis zum Teilnehmer geführt werden könnten. Von großem Vorteil ist, daß mit geringem Aufwand eine nachträgliche Verlegung in Straßen, Gehwegen, Radwegen, Randsteinen und dergleichen möglich ist. Dadurch kann ein technisches Konzept nach Wünschen der Betreiber in einfacher Weise angepaßt werden, wobei die vorhandene Infrastruktur (Wegerechte, Rohre für Abwasser, Gas, Fernwärme, etc.) genutzt werden kann. Nicht unerheblich dabei ist, daß mit dieser Technik eine große Zeiteinsparung gegenüber der Standardtechnik zu erreichen ist.

Beim Einbringen einer Verlegenut in die Asphaltdecke einer Bundesstraße, die sich aus einer oberen Deckschicht von 4 cm, einer Binderschicht von ca. 8 cm und einer Tragschicht von 10 bis 15 cm zusammensetzt, sind verschiedene Punkte zu beachten. Der Bitumenanteil nimmt zur Tragschicht hin ab, die grobkörnigen Füllstücke nehmen hingegen zu. Der Bitumen gewährleistet jedoch den Zusammenhalt innerhalb der einzelnen Schichten. Bei Fräsarbeiten bis in die Asphalttrageschicht ist dann die Verlegenut formstabil, so daß kein Material nachfällt und das Gesamtgefüge des Straßenoberbaus erhalten bleibt. Beim Einfräsen darf die Bitumentragschicht nicht bis zur Frostschutzschicht des Unterbaus durchtrennt werden, da dadurch Schwachstellen im Asphaltschichtenpaket entstehen können, die den Schichtverbund zerstören und innerhalb kurzer Zeit zu Straßenschäden führen könnten. Wenn das Minikabel jedoch wasserdicht und frostsicher verlegt ist, wird durch diesen Eingriff die Bodenmechanik nicht beeinflußt. Moderne Straßen sind jedoch frostsicher, da der Schotterunterbau trägt und die Belastung aufnimmt. Dieser führt Bodenwasser ins Erdreich oder in Dränrohre ab und eine dichte, unverletzte Deckschicht läßt kein Oberflächenwasser ein. Frostschäden können somit nicht auftreten. Bei dieser minimalen Verlegenutbreite und bei einer erschütterungsfreien Einfräsung bleibt der mechanische Aufbau der Straße erhalten. Unmittelbar nach der Verlegung wird durch einen heiß schmelzenden Bitumen oder durch ein schmelzbares Bitumenband die Verlegenut wieder frostsicher verschlossen.

Durch sehr starkes Verkehrsaufkommen kann es jedoch zu Nachverdichtungen und Fließen im Oberbau der Straße kommen (Spurrillen, Standspur). Es empfiehlt sich deshalb, daß das Minikabel unmittelbar nach der Verlegung mit einem aushärtbaren Kunststoff in der Verlegenut eingeschäumt wird. Nach der Aushärtung erreicht die Verschäumung eine ausreichende Druckstabilität, um die Last der Fahrbahndecke gleichmäßig weiter zu verteilen. Hohlräume und Zwickel zwischen dem Minikabel und der Verlegenut werden ausgefüllt und es verbleiben keine Hohlräume, die eventuell eindringendes Oberflächenwasser aufnehmen und längs des Minikabels weiterleiten könnten.

Erschütterungen durch den Schwerlastverkehr werden durch die Einschäumung absorbiert und nicht an das Minikabel weitergegeben. Durch den elastischen Schaum können auch kleinere Setzungen des Erdreichs ausgeglichen werden, so daß derartige Versetzungen in der Bitumentragschicht nicht zum Ausfall des Minikabels aufgrund einer Abknickung des Rohres oder einer Faserdehnung führen würden.

Bei einem Minikabel ist beispielsweise auch eine Druckgasüberwachung wie auch eine Überwachung mit einer Flüssigkeit möglich. So kann das Minikabel auch mit einer Flüssigkeit gefüllt werden, das bei Defekt der Röhre austritt und unter Lufteinwirkung verharzt. Auf diese Weise ist gewissermaßen eine "Selbstheilung" gewährleistet.

Außerdem ist das Minikabel abhörsicher, da keine Ausbiegung der Lichtwellenleiter erreicht werden kann. Das Minikabel ist querkraftstabil, besitzt eine hohe Zugkraft, ist kompakt und besitzt aufgrund des kleinen Durchmessers ein geringeres Gewicht und wenig Reibung. Die als Kabelmantel wirkende Röhre übernimmt auch gleichzeitig die Zugkraftfunktion des sonst üblichen Zentralelementes. Bei diesem hochfesten Kabel mit sehr geringer Dehnung tritt beim Einziehen und Verlegen des Minikabels kein Überlängenproblem auf. Bei dieser Ausgestaltung ist gegenüber einem normalen Kabel mit üblichem Kunststoffkabelmantel eine größere Festigkeit gegeben, so daß auch mit wesentlich größeren Einziehkräften gearbeitet werden kann. Bei der Metallausführung ist außerdem eine einfache Erdung möglich. Bei Verwendung von mehreren gegeneinander isolierten Röhrchen, kann der Metallquerschnitt auch für eine Stromversorgung von aktiven Komponenten verwendet werden. Durch Verwendung von Metallröhrchen könnten Luftkabel auch wesentlich einfacher aufgebaut werden. Auf ein Tragelement (z.B. ein Tragseil) könnte dann verzichtet werden, da die Metallröhrchen diese Funktion übernehmen. Zusätzlich ist ein derartiges Minikabel druckwasserdicht, gasdicht, bildet eine Wasserdampfsperre und gewährt Schutz gegen Nagetierverbiß. Weiterhin ist es brandsicher, besitzt hervorragende Wärmeableitung, ist alterungs- und korrosionsbeständig.

Die Flexibilität des Minikabels bzw. des Rohres kann durch einen Rillmantel verbessert werden.

Sonstige Weiterbildungen der Erfindung sind in Unteransprüchen wiedergegeben.

Die Erfindung wird nun anhand von Figuren näher erläutert.

Figur 1    zeigt den Aufbau des röhrenförmigen Mikro- bzw. Minikabels mit einer Verkappung.

Figur 2    zeigt schematisch einen Längsschnitt durch die Miniröhre ohne Lichtwellenleiter.

Figur 3    zeigt die schematische Verlegung eines Minikabels.

Figur 4    zeigt das Eindrückverfahren eines Minikabels.

Figur 5     zeigt das Einschiebverfahren eines Minikabels.

Figur 6     zeigt das Einspülverfahren einer Miniröhre.

Figur 7     zeigt die Verlegetechnik des röhrförmigen Minikabels mit der bereits wieder aufgefüllten Verlegenut.

Figur 8     verdeutlicht den Querschnitt eines Straßenbelages mit eingefräster Verlegenut.

Figur 9     zeigt die bereits wieder aufgefüllte Verlegenut.

Figur 10     zeigt einen U-förmigen Niederhalter für Mikrokabel in der Verlegenut.

Figur 11     zeigt einen nietenförmigen Metallbolzen als Niederhalter für Minikabel.

Figur 12     zeigt in einer Draufsicht den skizzierten Aufbau einer Biegevorrichtung für dünnwandige röhrchenförmige Mikro- bzw. Minikabel.

Figur 13     zeigt die mit Heißbitumen und farbigen Glaspartikeln gefüllte Verlegenut.

Figur 14     zeigt in einem Längsschnitt durch die Straßenoberfläche längs einer gefrästen Verlegenut eine Längenausgleichsschlaufe.

Figur 15     zeigt eine Muffe für ein röhrenförmiges Mikro- bzw. Minikabel.

Figur 16     zeigt eine Verlegenut für die Verlegung eines Minioder Mikrokabels.

Figur 17     zeigt eine verbreiterte Verlegenut vor dem Ausbrechen des entstandenen Mittelsteges.

Figur 18     zeigt den Querschnitt durch die Fräsradanordnung der Verlegeeinheit.

Figur 19     zeigt einen Distanzring mit rechteckförmigen Nuten auf seinem äußeren Umfang.

Figur 20     zeigt einen Distanzring mit sägezahnförmgen Nuten auf seinem äußeren Umfang.

Figur 21     zeigt die Anordnung von Bürsten auf dem äußeren Umfang des Distanzringes.

Figur 22     zeigt die seitliche Versetzung von Hartmetallzähnen.

Figur 23     zeigt ein verlegtes Mikrokabel mit einem zusätzlich verlegten zugfesten Trennelement.

Figur 24     zeigt ein verlegtes Mikrokabel mit einem Füllprofil als Füllmittel für die Verlegenut.

Figur 25     zeigt die elektrische Verbindung zweier Mini- bzw. Mikrokabel über eine metallische Kabelmuffe.

Figur 26     zeigt ein isoliertes Mikrokabel mit einem isolierten Stromkabel.

Figur 27     zeigt ein unisoliertes Mikrokabel mit einem isolierten Stromkabel.

Figur 28     zeigt ein nichtisoliertes Stromkabel mit einem isolierten Mikrokabel.

Figur 29     zeigt ein isoliertes Mikrokabel mit einem Kabelniederhalter.

Figur 30     zeigt ein Mikrokabel mit einem Zusatzkabel in einer gemeinsamen Isolierung.

Figur 31     zeigt eine Ausführung nach Figur 30, jedoch mit zwischenliegendem Steg aus Isolationsmaterial.

Figur 32     zeigt zwei elektrisch isolierte Mini- bzw. Mikrokabel.

Figur 33     zeigt zwei Mini- bzw. Mikrokabel innerhalb einer gemeinsamen Isolierung.

Figur 34     zeigt in einer Skizze die Durchführung des Verfahrens.

Figur 35     zeigt die Verlegung des Mini- bzw. Mikrokabels mit magnetbestückten Kabelniederhaltern.

Figur 36     zeigt U-förmige, magnetische Kabelniederhalterin der Verlegenut.

Figur 37     zeigt stabförmige, magnetische Kabelniederhalter in der Verlegenut.

Figur 38     zeigt stabförmige Kabelniederhalter, die auf Trägerfäden aufgereiht sind.

Figur 39     zeigt einen Kabelniederhalter, der mit seinen Enden auf Trägerfäden aufgeklemmt ist.

Figur 40     zeigt einen Kabelniederhalter, der in eine Trägerfolie eingeknüpft ist.

Figur 41     zeigt die Verlegung des Mikrokabels mit elektronischen Signalgebern als Niederhalter.

Figur 42 zeigt ein von außen frei programmierbares Chip, das längs des Mikrokabels angebracht und auf Trägerfäden aufgereiht ist.

Figur 43 zeigt ein programmierbares Chip, das in einer Muffe untergebracht ist.

Figur 44 zeigt ein defektes Mikrokabel.

Figur 45 zeigt die Reparaturstelle in einer Aufsicht.

Figur 46 zeigt die Reparaturstelle in einem Querschnitt.

Figur 47 zeigt ein Gerät zum Freilegen der Verlegenut.

Figur 48 zeigt einen in Längsrichtung eingebrachten Moosgummi.

Figur 49 zeigt eine Verlegenut mit einem Profilkörper kreisförmigen Querschnitts vor dem Verpressen.

Figur 50 zeigt die Verlegenut nach ihrem Verschluß.

Figur 51 zeigt ein Verlegegerät.

Figur 52 zeigt einen längsgeschlitzten, ringförmigen Profilkörper, der auf dem Mikrokabel aufgebracht ist.

Figur 53 zeigt die Anordnung nach Figur 52 nach dem Auffüllen der Verlegenut.

Figur 54 zeigt einen Profilkörper mit längsverlaufenden Freikanälen.

Figur 55 zeigt den Profilkörper nach Figur 54 in der Verlegenut.

Figur 56 zeigt einen Profilkörper, der mit einem Dichtmittel beschichtet ist.

Figur 57 zeigt ein Ausführungsbeispiel zur Erwämung des Dichtmittels beim Verlegevorgang.

Figur 58 zeigt das Abdeckprofil nach dem Verlegevorgang in der Verlegenut.

Figur 59 zeigt die mechanische Einwirkung durch einen spitzen Gegenstand im Querschnitt.

Figur 60 zeigt die Einwirkung des Gegenstandes auf das Abdeckprofil in einer Frontansicht.

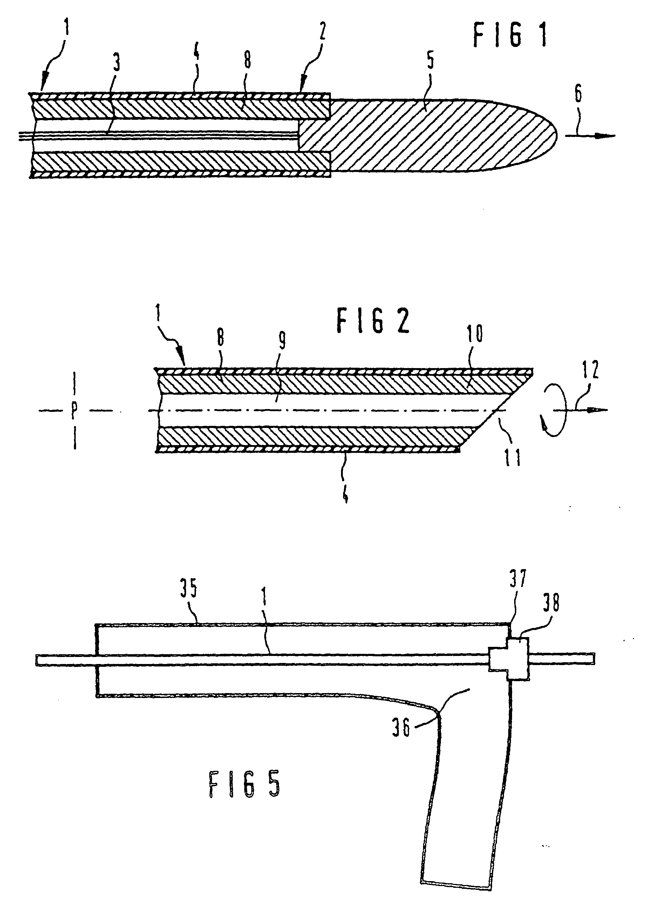

In der Figur 1 wird der Aufbau eines röhrenförmigen Mikro- bzw. Minikabels 1 gezeigt, wobei das Kabelende 2 mit einer Einzieh- oder Bohrspitze 5 versehen ist. Der Pfeil 6 deutet die Bohrbewegung bzw. Vortriebsrichtung des Bohrkopfes an. Im Innern des Minikabels 1 verlaufen die Lichtwellenleiter 3, die entweder bereits werksseitig oder nach dem Verlegen eingeführt werden können. Die Außenoberfläche des Minikabels ist mit einem Oberflächenschutz 4 versehen.

Die Figur 2 zeigt nun die Röhre 8 des Minikabels 1, wobei im Inneren, das heißt im Zentralkanal noch keine Lichtwellenleiter angeordnet sind. In diesem Fall dient dieser Zentralkanal zunächst als Druckspülkanal für den Verlegevorgang. So wird ein entsprechendes Medium, zum Beispiel eine geeignete Flüssigkeit unter Druck eingepreßt, so daß am Ende 11 des Minikabels das Erdreich ausgespült und verdrängt wird. Zusätzlich kann durch rotierende Bewegung der Bohrspitze 10 entsprechend der Pfeilrichtungen 12 die Wirkung erhöht werden. Anschließend an den Verlegevorgang werden dann in die Röhre 8 des Minikabels 1 die Lichtwellenleiter oder sogenannte "blown fiber"-Adern eingebracht. An der linken Seite des Minikabels symbolisiert der Buchstabe P den für das Spülverfahren benötigten Druck, mit dem das Medium eingepreßt wird. Wird am Ende der Bohrspitze 11 ein Ventil angebracht, kann durch entsprechende Steuerung die Flüssigkeit pulsierend unter Druck austreten. Gleichzeitig könnte sich die Röhre 8 oszillierend im Durchmesser vergrößern und verkleinern, wodurch eine Haftreibung zum Erdreich ausgeschlossen wird.

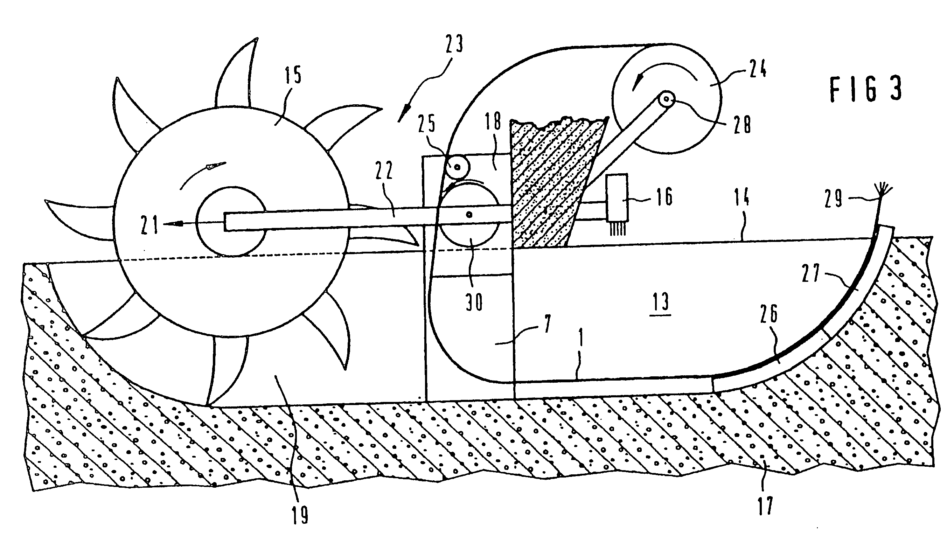

Die Figur 3 vermittelt die Verlegetechnik eines rohrförmigen Minikabels im Sand, Kies, Erdreich oder Asphalt mit Hilfe einer Verlegeeinheit 23, mit der in die Oberfläche 14 des Verlegegrundes 17 eine Verlegenut 19 eingefräst wird. Zuvor werden Abdeckplatten oder Kopfsteinpflaster entfernt. Die Vorrichtung besteht aus einem Gestänge 22, an dem die benötigten Einzelteile zu einer Einheit zusammengefaßt sind. Alle Verfahrensschritte sind aufeinander abgestimmt. Bei der in Verlegerichtung 21 zu erstellenden Verlegenut 19 läuft ein Fräsrad 15 mit entsprechenden Fräszähnen voran, mit denen eine dünne Verlegenut 19 mit steilen Seitenwänden eingeschnitten wird. Die Breite der Verlegenut ist gerade ausreichend um das röhrenförmige Minikabel 1 und das Verlegeschwert 18 aufzunehmen. Dieses Verlegeschwert 18 bewahrt die Seitenwände vor dem Zusammenfallen, führt das Minikabel 1 nach und hält das Ende des zu verlegenden Kabels über eine Kabelfixierung 7 konstant auf Verlegetiefe, wobei das Mini-oder Mikrokabel 1 von einem auf einer Verlegespule 24 aufgespulten Ring und über Vorschubrollen 25 zugeführt wird. Eine Einspüllanze 16 verdichtet das aufgeschüttete Erdreich bzw. den Füllsand 20 hinter dem Verlegeschwert 18. Dieser Vorgang erfolgt unmittelbar nach dem Grabevorgang. Die Seitenwände der Verlegenut im Bereich 13 der Verlegevorrichtung können damit nicht einfallen. Umgebendes Erdreich wird nicht nachstürzen, so daß sich die Oberfläche 14 nicht einsenken wird. Das Fräsrad 15, das Verlegeschwert 18 und die Einspüllanze 16 bilden zusammen die Verlegeeinheit 23, und werden über ein Gestänge 22 starr untereinander verbunden. Ein Antrieb 30 bewegt die gesamte Verlegeeinheit 23 kontinuierlich in Verlegerichtung 21. Über einen sogenannten Verlegebogen 26 und eine Verlegekausche 27 wird das Ende 29 des Minikabels zu Beginn der Verlegenut 19 eingeführt. An der Verlegeeinheit 23 ist ein Zentralanschluß 28 für Druckwasserspülung vorgesehen. Anschließend kann nach dem Verlegevorgang die Wiederherstellung oder Versiegelung der Straßenoberfläche erfolgen.

Bei einer derartigen Verlegung ergeben sich besondere Vorteile, da alle Kabeltypen mit kleinem Durchmesser verlegt werden können, wobei der Aufwand wesentlich geringer ist als bei herkömmlicher Verlegung mit breit ausgehobenem Graben. Beim Verlegevorgang wird das Minikabel sowohl vom Verlegeschwert gezogen als auch von den Vorschubrollen nachgeführt. Ziehen und Drücken des Minikabels beim Verlegevorgang kann die Zugbelastung reduzieren. Außerdem verhindert die Rohrkonstruktion des Minikabels ein Ausknicken beim Verlegen in die Nut, Graben, Verlegen, Zuschütten und Verdichten des Erdreichs erfolgen unmittelbar aufeinander und stellen einen präzise aufeinander abgestimmten Arbeitsablauf dar. Durch die sehr schmale Verlegenut wird das Kabel gestützt, so daß die Gefahr zum Ausknicken reduziert ist. Außerdem wird bei einer derartig schmalen Verlegenut die Bodenmechanik und die Oberfläche des Verlegegrundes nur minimal gestört, so daß eine Nachbehandlung nicht nötig ist. Durch den abgestimmten Arbeitsablauf können die Seitenwände der Verlegenut nicht einstürzen, so daß auch das Nachrutschen des Erdreiches verhindert wird. Wenn zum Einführen der Lichtwellenleiter die "blown fiber - Technik" angewendet wird, werden ein oder mehrere Hohlrohre verlegt, wodurch dann Druckwasser bis unmittelbar an das Fräsrad geführt werden kann. Dadurch wird das Gestein bzw. der Untergrund aufgelockert.

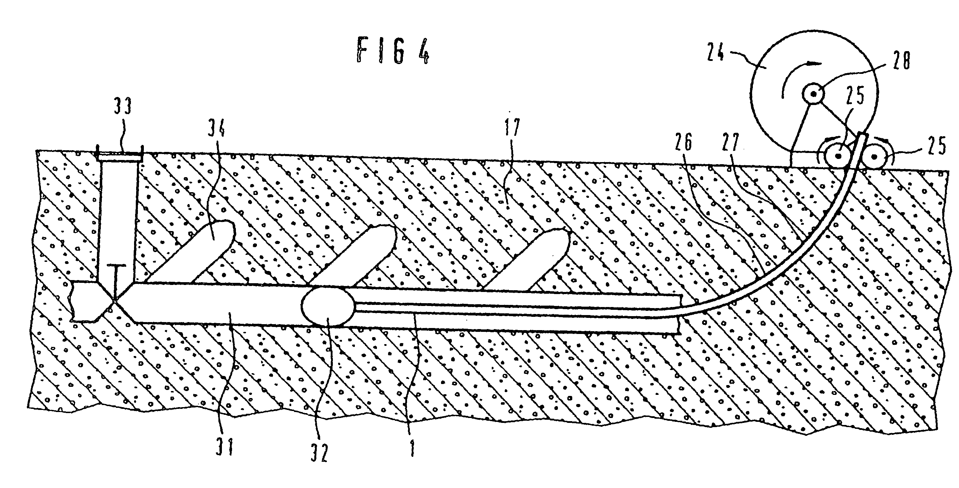

Figur 4 vermittelt das System nach dem Eindrückverfahren, durch das ein Minikabel 1 in eine aufgelassene Versorgungsleitung 31 eingedrückt wird. Dabei wird angedeutet, daß das einzudrückende Minikabel 1 beispielsweise auch auf Verschmutzungen 32 stoßen kann, die eine Verstopfung der Versorgungsleitung darstellen. Durch entsprechenden Druck muß diese Verschmutzung 32 durchstoßen werden. In dieser Figur ist weiter dargestellt, daß die aufgelassene Versorgungsleitung 31 mehrere Abzweigungen aufweisen kann, so daß auch von dort aus Minikabel eingeführt werden könnten. Ursprünglich für die Versorgungsleitung eingesetzte Ventilöffnungen 33, die jeweils mit einer Abdeckung versehen sind, könnten für das neu eingeführte Minikabelsystem für Muffeneinsätze genutzt werden. Zu Beginn der Eindrückstelle wird das Minikabel 1 ebenfalls über einen sogenannten Verlegebogen 26 und eine Verlegekausche 27 eingeführt, wobei der Vorschub beispielsweise wiederum mit Vorschubrollen 25 erfolgt. Das Minikabel 1 wird auch hier von einer Verlegespule 24 abgezogen. Über einen Zentralanschluß 28 für Druckwasser kann auch hier Druckwasser an die Endstelle des eingeführten Minikabels 1 gepreßt werden.

In Figur 5 wird das Einbringen eines Minikabels 1 in eine bestehende Versorgungsleitung, zum Beispiel in ein Wasserrohr, erläutert. An einem Bogen 36 der Versorgungsleitung 35 wird über eine Auslaßstelle 37 das Minikabel 1 eingeführt, wobei die Eintrittsstelle mit einer entsprechenden Abdichtung 38 versehen wird. Das Vorantreiben des Minikabels 1 innerhalb der Versorgungsleitung erfolgt relativ problemlos, da keine Hindernisse zu erwarten sind. In die Versorgungsleitung eingepreßtes, fließendes Wasser oder Gas unterstützt das Vorantreiben des Minikabels.

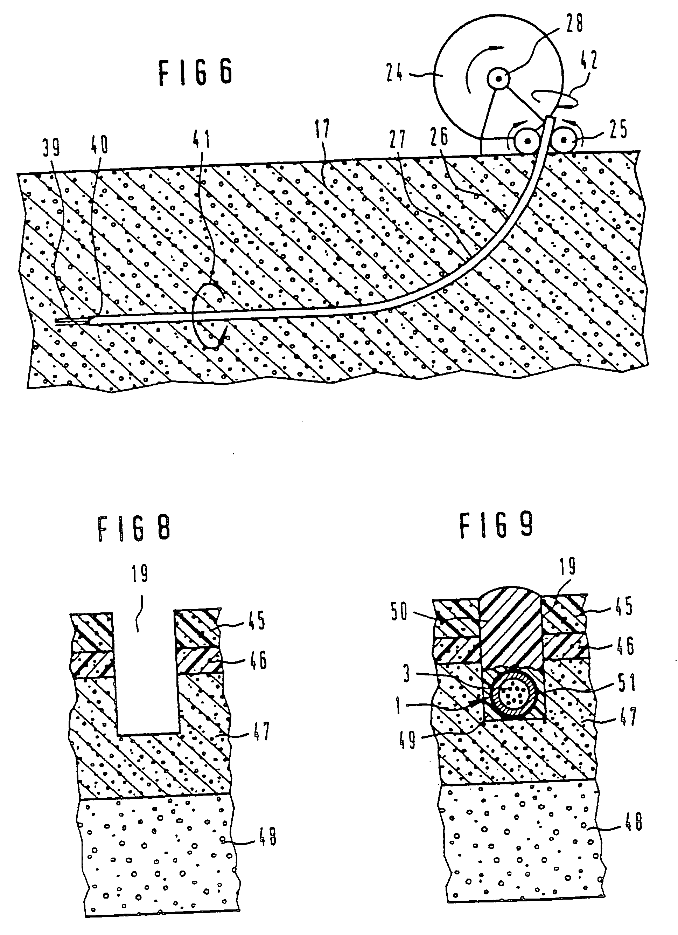

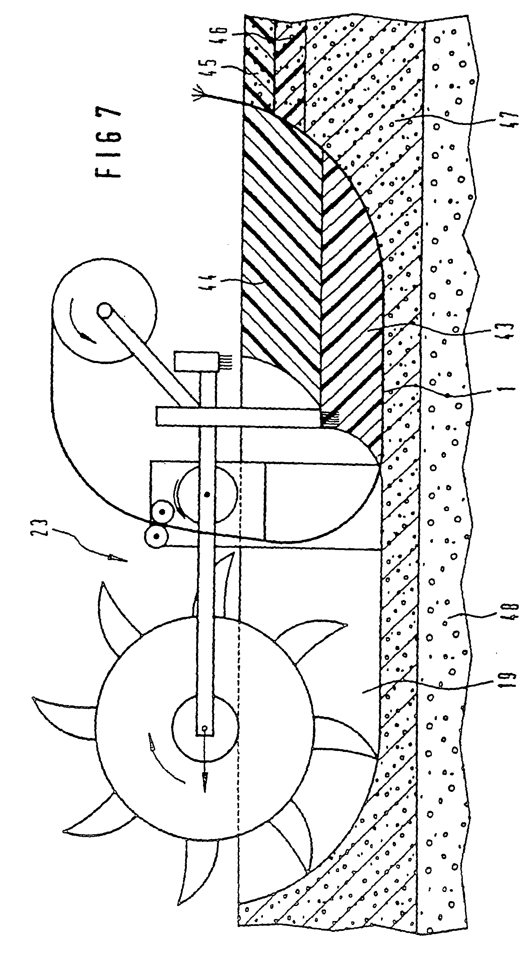

In Figur 6 wird das Einspülverfahren einer Miniröhre erläutert, die dann im zweiten Verfahrensschritt nach dem "blown fiber-Prinzip" mit Lichtwellenleitern versehen und damit zum Minikabel komplettiert wird. Wie bereits angedeutet, wird hier zunächst nur die leere Miniröhre in das Erdreich 17 eingespült. Dabei wird über den Zentralanschluß 28 Druckwasser in die Miniröhre eingeleitet, so daß sich am Ende des Bohrkopfes 40 ein Druckspülkegel 39 ausbildet, durch den das Erdreich 17 ausgespült wird. Die Bohrspitze 40 wird dabei zusätzlich in Drehbewegung 41 versetzt, um die Ausspülwirkung zu erhöhen. Zweckmäßigerweise wird auch die Miniröhre an der Eintrittsstelle in Drehbewegung 42 versetzt. Nach der Verlegung der Miniröhre werden dann die Lichtwellenleiter nach dem "blown fiber-Verfahren" eingespült oder eingeblasen. Die Innenwandung des Rohres ist mit Kunststoff ausgekleidet, um die Gleitbewegung des Faserelementes beim Einblasen zu verbessern.

In Figur 7 wird die Verlegung eines Mikrokabels in einer asphaltierten Straßendecke dargestellt. Ergänzend zur Verlegung des Minikabels 1 in einer gefrästen Verlegenut 19 wird die Verlegenut 19 nach dem Einlegen des Minikabels 1 zunächst mit einem aushärtbaren Füllschaum 43 teilweise angefüllt. Darüber wird schließlich die Verlegenut 19 mit einem wasserdichten Verschluß 44, zum Beispiel aus Heißbitumen aufgefüllt, so daß die Fahrbahnoberfläche wieder dicht abgeschlossen ist. Weiterhin ist aus dieser Figur 7 ersichtlich, daß sich ein Straßenaufbau aus verschiedenen Schichten zusammensetzt. Auf eine Frostschutzschicht 48, im allgemeinen aus Schotter, wird eine Tragschicht 47 angeordnet. Darüber schließt sich eine Binderschicht 46 an, die schließlich mit einer Deckschicht 45 versiegelt wird. Daraus ist erkennbar, daß die Verlegenut 19 die Tragschicht 47 nicht vollständig durchtrennen darf, damit die Tragefunktion nicht unterbrochen wird.

Figur 8 verdeutlicht die Lage der Verlegenut 19 in einem Straßenquerschnitt mit dem bereits beschriebenen Schichtenaufbau aus einer Frostschutzschicht 48, einer Asphalttragschicht 47, einer Binderschicht 46 und einer Deckschicht 45. Durch die Verlegenut 19 wird lediglich die Deckschicht 45 und die Binderschicht 46 durchschnitten, während die Asphalttragschicht 47 nur zum Teil eingeschnitten wird. Die Schnitttiefe liegt je nach Beschaffenheit des Straßenbelages zwischen 4cm und 15cm. Optimal ist eine Verlegetiefe von ca. 7 cm.

Die Figur 9 vermittelt den gleichen Aufbau wie Figur 8, jedoch ist zusätzlich dargestellt, in welcher Form die Verlegenut 19 nach dem Einlegen des röhrenförmigen Minikabels 1 wieder aufgefüllt und verschlossen wird. So ist erkennbar, daß der Nutgrund um das Minikabel 1 herum mit einem aushärtbaren Füllschaum versehen ist, über dem ein Bitumenverguß oder ein Bitumenfugeband dicht eingefüllt ist. Das Füllmaterial 49 könnte auch schon werkseitig auf das Mikrokabel als Kabelmantel aufgebracht werden. Es würde einen zusätzlichen Schutz beim Verlegen des Mikrokabels bilden. Durch geeignete Mittel oder Verfahren, z.B. mit Wärmezuführung, könnte das Füllmittel zum Schäumen gebracht werden. Damit ist die Verlegenut 19 dicht verschlossen, so daß kein Oberflächenwasser eindringen kann. Im Inneren des Minikabels 1 sind Lichtwellenleiter 50 angedeutet. Um Beschädigungen bei der Verlegung und Korrosion auf dem Außenmantel des metallischen Rohres durch Kriechströme im Erdreich auszuschließen, ist das Minikabel 1 auf der Außenseite mit einer nicht leitenden Schutzschicht 51 versehen, die das Metall gegenüber dem Erdreich isoliert. Als Schutzschicht kann ein dünner Kabelmantel aus Kunststoff aufgebracht werden. Für diesen Zweck kann auch ein festsitzender abriebfester Lack aufgetragen werden. Mit Heißbitumen wird die Nut abschließend versiegelt. Wenn zur Abdichtung der Verlegenut 19 ein Bitumenfugenband verwendet wird, so wird dies hochkant in die Verlegenut 19 eingefügt und mit einer Gasflamme oder Infrarot werden die zu verbindenden Deckschichten angewärmt bis ein flüssiger Bitumenfilm entstanden ist. Ein leichter Überstand des Bitumenbandes wird beim anschließenden Walzen in die Fuge gedrückt und verschließt somit die Nut wasserdicht.

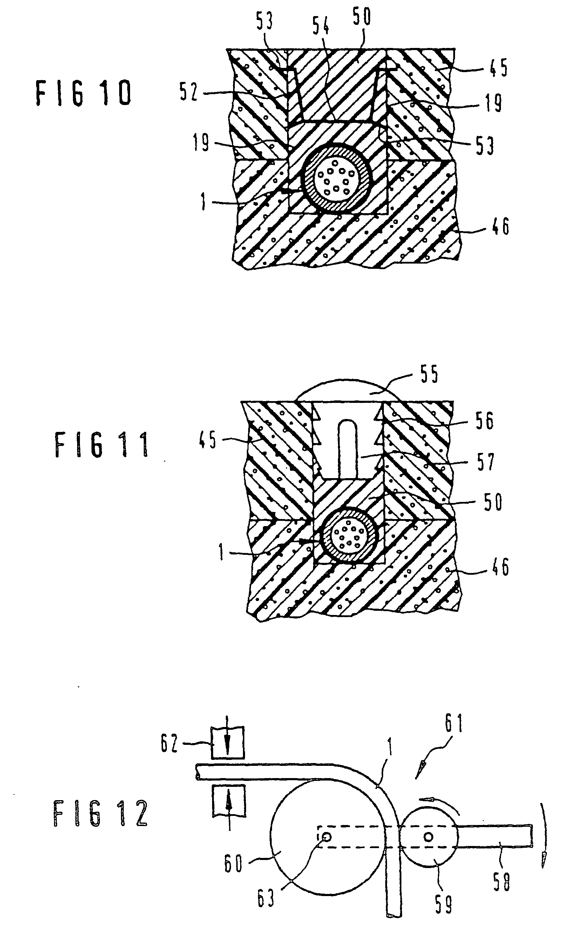

In Figur 10 wird erläutert, daß das eingelegte Minikabel 1 mit U-förmigen Niederhaltern 52 fixiert wird. Diese U-förmigen Klammern 52 werden von oben in die ausgefräste Verlegenut 19 eingepreßt. Dabei hält der Steg 54 der Klammer 52 das eingelegte Mikro- bzw. Minikabel nieder. Durch die Federwirkung der seitlichen Flansche werden Toleranzen in der Nutbreite ausgeglichen. Die Flanschenden können mit seitlichen Krallen 53 versehen werden, damit sie sich in die Seitenwände der Verlegenut 19 einkrallen können. Kommt es beispielsweise zu einer Erweichung der Füllmasse bei sommerlichen Temperaturen, halten die Kabelniederhalter 52 das Mikro- bzw. Minikabel in Position, ohne es aufsteigen zu lassen.

Die Figur 11 zeigt ein weiteres Ausführungsbeispiel für Kabelniederhalter 57. Sie bestehen aus nietenförmigen Metallbolzen, die mit ihrem federnden Schaft 57 in die ausgefräste Verlegenut 19 getrieben werden. Der linsenförmige Kopf 55 schließt mit der Fahrbahndecke ab oder ist leicht erhaben. Durch die Köpfe 55 der Niederhalter ist die Kabeltrasse leicht zu erkennen. Der Schaft des Kabelniederhalters 57 ist mit Widerhaken 56 versehen.

In Figur 12 wird eine Biegevorrichtung für Kabelabzweigungen und Ausgleichsschlaufen für dünnwandige röhrchenförmige Mikro- bzw. Minikabel dargestellt. Bei sehr kleinen Wandstärken ist das Mikro- bzw. Minikabel sehr knickempfindlich. Radien bis herunter zu 30 mm lassen sich jedoch knickfrei mit einer Biegevorrichtung 61 herstellen. Dazu wird das Mikrokabel 1 mit einer Spannzange 62 fixiert und um einen Biegedorn 60 gezogen. Zur einfachen Handhabung kann eine Andruckrolle 59 das Mikro- bzw. Minikabel 1 um den Biegedorn ziehen, wobei der Handhebel 58 in Pfeilrichtung betätigt wird. Der Drehpunkt 63 des Handhebels liegt in der Achse des Biegedorns 60.

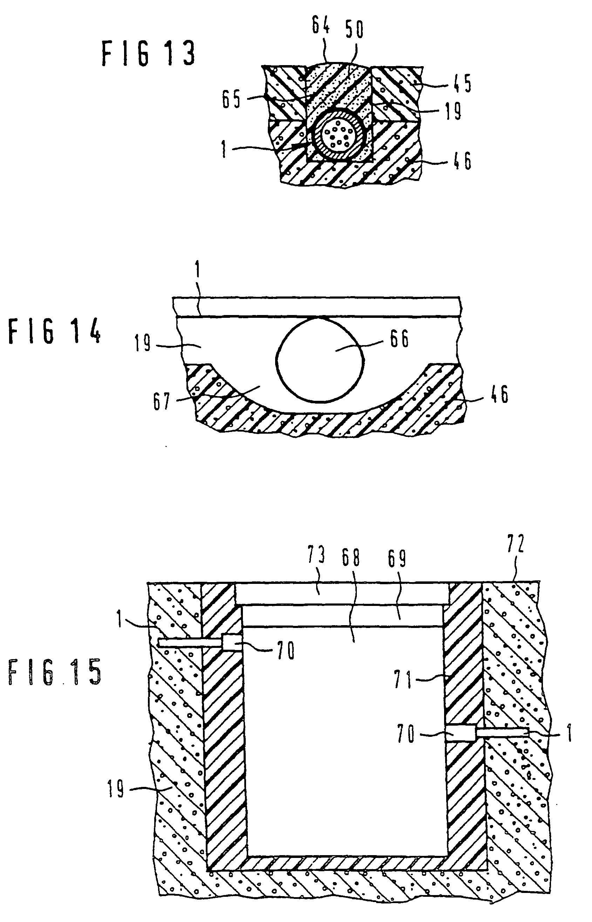

Die Figur 13 verdeutlicht ein Ausführungsbeispiel für eine Kennzeichnung bzw. Markierung der Mikro- bzw. Minikabeltrasse. Eine derartige Kennzeichnung ist besonders wichtig zur Auffindung des Mikro- bzw. Minikabels und dient gleichzeitig als Warnmarkierung bei Straßenbaumaßnahmen. Die gefräste Verlegenut 19 wird mit einem Heißbitumen 65 hermetisch verschlossen. Dabei wird das Heißbitumen 65 beispielsweise mit Glassplittern 64 als Füllstoff versetzt, so daß bei Lichteinfall der Verlauf der Verlegenut 19 durch Lichtreflexion deutlich wird. Heißbitumen ist bei der Verarbeitung meist sehr dünnflüssig. Bei einer Verlegenutbreite von 7 bis 10 mm kann die Viskosität des Heißbitumens durch Zuschlagstoffe erhöht werden. Die mechanischen Eigenschaften der Vergußmasse sind dann auch mit denen der vorhandenen Straßendecke vergleichbar. Für die Markierung können gemahlene, farbige Glassplitter als Füll- und Zuschlagstoffe verwendet werden. Durch unterschiedliche Farbgebung und Reflexion ist dann die Kabeltrasse gut zu erkennen. Bei normalem Abrieb der Fahrbahndecke werden immer einige Glaspartikel freigelegt und sind somit gut zu erkennen.

In Figur 14 wird dargestellt, daß das Mikro- bzw. Minikabel zum Längenausgleich wie auch bei Kabeldurchführungen an einer Muffe mit Ausgleichsschlaufen 66 versehen werden kann. Damit werden Überlängen beim Verlegen und beim Krimpen der Rohre aufgenommen und Setzungen im Erdreich, in der Straße, sowie Längendehnungen im Mikro- bzw. Minikabel und der Straßendecke ohne schädliche Längsspannungen ausgeglichen. Derartige Ausgleichsschlaufen 66 sind bei der Verlegung anzubringen, wobei an den entsprechenden Stellen die Verlegenut 19 mit einer entsprechenden Vertiefung 67 bzw. Verbreiterung versehen werden muß, um genügend Platz für die Ausgleichsschlaufe 66 zu erhalten. Derartige Ausgleichsschlaufen 66 sind vorzugsweise vor Muffen, Kabelabzweigungen und Biegungen anzubringen. Soll ein Mikro- bzw. Minikabel rechtwinklig verlegt werden, so ist in dem Verlegegrund eine Kernbohrung senkrecht in den Oberbau der Straße einzubringen. Dabei richtet sich der Durchmesser nach dem minimalen Radius des Mikro- bzw. Minikabels, das mittels der beschriebenen Biegevorrichtung knickfrei gebogen werden kann. Die Kernbohrung ist anschließend wieder durch Asphalt frostsicher zu versiegeln. Statt der Ausgleichsschlaufen sind auch U-förmige Ausbiegungen des Minikabels möglich.

Figur 15 vermittelt eine Anordnung für eine Muffe 68, in welche über Kabeleinführungen 70 Mikro- bzw. Minikabel 1 zugeführt werden. Im Innenraum der Kabelmuffe werden dann die entsprechenden Maßnahmen wie Verbindungen oder Spleißungen vorgenommen. Eine derartige Kabelmuffe besteht vorzugsweise aus einem runden Stahlzylinder und wird in eine Kernbohrung des Verlegegrundes 17 eingesetzt. Ein von oben aufsetzbarer Muffendeckel 69 verschließt den Muffeninnenraum. Die aufrecht stehende Kernbohrung, die bis in den Unterbau der Straße führen kann, wird nach dem Einsetzen der Muffe 68 und der Einführung der Mikrokabel 1 in die Muffe im unteren Bereich in die Fahrbahn einbetoniert. Dadurch setzt sich die Muffe nicht mehr. Die Abdichtung zum Oberbau der Straßendecke 72 erfolgt mit Asphalt oder flüssigem Heißbitumen. Die Abdichtung in den Kabeleinführungen 70 erfolgt beispielsweise mit herkömmlichen Schneidringdichtungen oder anderen, in der Kabelmuffentechnik an sich bekannten Abdichtungen. Es haben sich auch dünne Kupferröhrchen bewährt, in die die Kabelenden einzuführen sind. Durch radiale Pressung werden diese auf die Außenwandung des Mikrokabels gekrimpt. Diese Krimpverbindungen sind zugfest und druckwasserdicht. Nach oben wird die Kernbohrung mit einem tragfähigen Deckel 73 im Niveau der Straßendecke 72 abgeschlossen. Falls erforderlich kann der Deckel auch unter der Fahrbahndecke liegen. Im Inneren der Kabelmuffe 68 können die Lichtwellenleiter in an sich bekannter Weise mit Überlängen und mit Spleißen angeordnet werden. Durch die runde Ausführung der Kabelmuffe 68 bietet sich an, die Lichtwellenleiter schraubenförmig einzulegen, so daß sie bei Bedarf leicht nach oben entnommen werden können.

Eine vorteilhafte Variante ist auch die Verwendung eines Kleinstschachtes statt der Muffe 68, wobei dieser Kleinstschacht wiederum eine Muffe aufnimmt.

Ab- und Zuführungen können ebenfalls als Mini- bzw. Mikrokabel in der Art eines Luftkabels oder freigeführten Kabels geführt werden.

Es können in einem Arbeitsgang Verlegenuten in den festen Verlegegrund geschnitten bzw. gefräst werden, indem eine Verlegenut mit einer Verlegeeinheit eingefräst wird, deren Fräsradanordnung in der Stärke so variiert wird, daß die Breite der Verlegenut in einem Fräsvorgang dem entsprechenden Durchmesser der verwendeten Mikro- bzw. Minikabel angepasst wird.

Vorteile sind besonders darin zu sehen, daß nun die Herstellung von Verlegenuten in einem festen Verlegegrund wie Asphalt- und Betonböden, Straßenbelägen, Randsteinen oder Steinplatten mit einer Verlegeeinheit erfolgen kann, bei der die Schnitt- bzw. Fräsbreite auf den jeweiligen Durchmesser des verwendeten Mini- bzw. Mikrokabels eingestellt werden kann. Hierfür wird beispielsweise eine Fräsradanordnung aus zwei Standard-Trennscheiben unter Zwischenlage eines Distanzringes auf die Achse der Verlegeeinheit aufgezogen. Durch Austausch des Distanzringes kann somit die Schnittbreite verändert werden. Bei breiten Verlegenuten bleibt zunächst ein Mittelsteg im Verlegegrund bestehen, doch werden Maßnahmen getroffen, durch die der entstandene Mittelsteg an seinem Basispunkt während des Fräsvorganges ausgebrochen wird. Dies erfolgt durch entsprechende Gestaltung der Umfangsfläche des Distanzringes, wie durch Einbringen von Nuten in geeigneter Form, zum Beispiel in Rechteck- oder Sägezahnform, oder durch Anbringen von stabförmigen, flexiblen Bürsten auf dem Umfang. Diese reinigen auch die Nut vom Schleifstaub. Dadurch ergeben sich insbesondere die nachfolgend aufgeführten Vorteile:

- Herstellung von rechteckförmigen Verlegenuten in beliebiger Breite.

- Die Breite der Verlegenut kann durch Auswechseln des Distanzringes bestimmt werden.

- Durch den Doppelschnitt in einem Arbeitsvorgang ist der Werkzeugverschleiß gleichmäßig, wobei die Trennscheiben nicht auf Biegung beansprucht werden, so daß keine Unwuchten entstehen.

- Der zunächst entstehende Mittelsteg in der Verlegenut wird während des Fräsvorganges am Basispunkt ausgebrochen.

- Durch entsprechende Gestaltung des äußeren Umfanges des Distanzringen erfolgt auch gleichzeitig die Säuberung der Verlegenut.

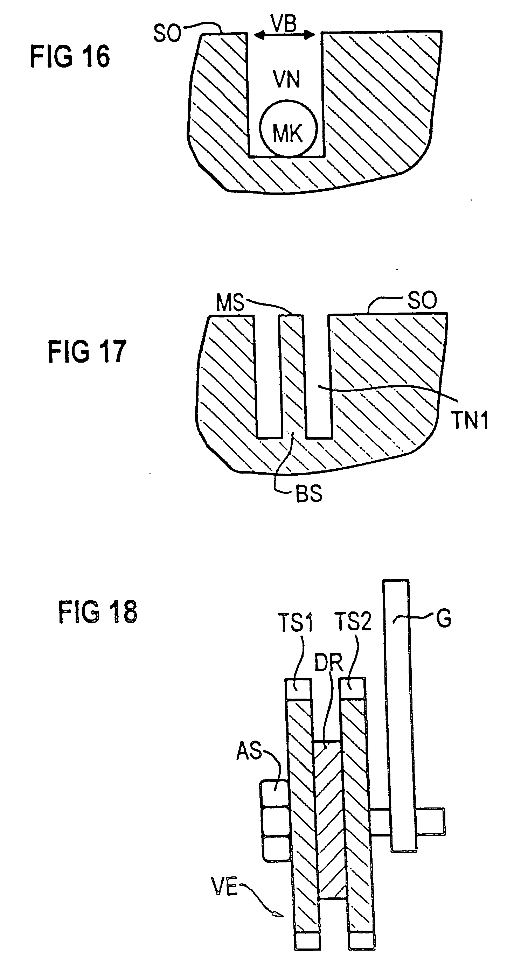

In Figur 16 wird eine rechteckförmige Verlegenut VN in der Oberfläche SO eines festen Verlegegrundes gezeigt, wobei durch einen Doppelpfeil angedeutet ist, daß die Nutbreite VB entsprechend des verwendeten Mini- bzw. Mikrokabeltyps MK variierbar sein muß, um die erforderliche Breite in einem einzigen Fräsvorgang ausführen zu können.

Die Figur 17 verdeutlicht die Herstellung der verbreiterten Verlegenut durch zwei Trennscheiben, die in einem dem jeweils eingesetzten Distanzring entsprechenden Abstand voneinander angeordnet werden, so daß zunächst ein Mittelsteg MS zwischen den beiden Teilnuten TN1 und TN2 erhalten bleibt. Durch die entsprechende Umfanggestaltung des Distanzringes wird dieser Mittelsteg MS jedoch sofort während des Fräsvorganges am Basispunkt BS abgebrochen, so daß die in Figur 16 gezeigte breite Verlegenut erhalten wird.

In Figur 18 ist im Querschnitt die Fräsradanordnung, die aus zwei Scheiben TS1 und TS2 mit dazwischen liegendem Distanzring DR besteht, dargestellt, wobei der Distanzring DR in seiner Breite so ausgewählt wird, daß er zusammen mit den beiden Trennscheiben TS1 und TS2 die erforderliche Breite der Verlegenut VN ergibt. Die Antriebsachse AS ist über entsprechende Gestänge G in der Verlegeeinheit VE eingesetzt.

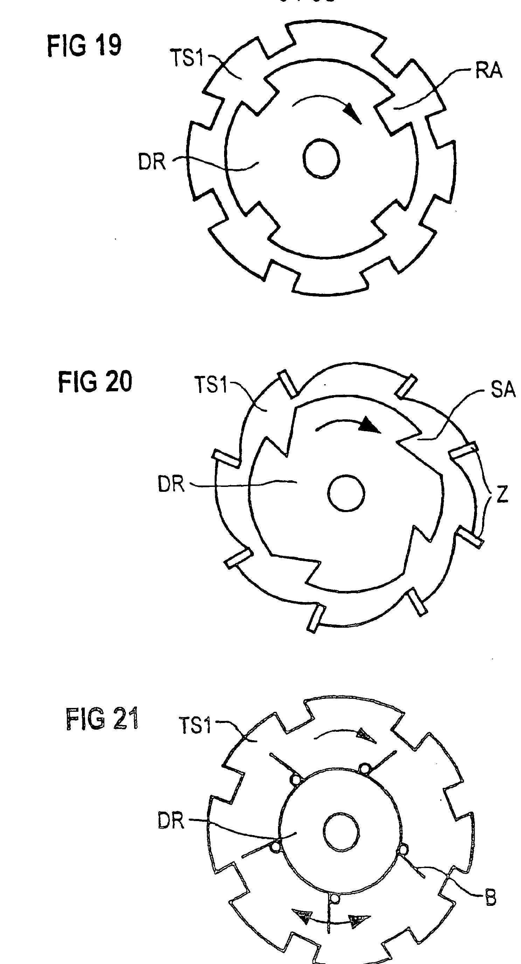

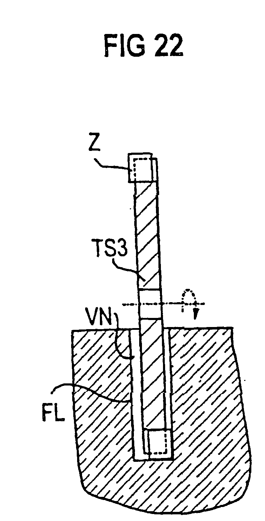

Die Figuren 19 bis 22 verdeutlichen die Ausgestaltung des Umfanges des Distanzringes DR, wobei für diese Darstellung die Trennscheibe TS2 abgenommen ist. Die Trennscheibe TS1 ist nach herkömmlicher Art mit entsprechenden Schneide- bzw. Fräszähnen bestückt. Diese Fräszähne Z können auch mit Hartmetall bestückt werden. Gegebenenfalls können die Schneiden ausgewechselt werden. Vorzugsweise sollten die Schneiden abwechselnd aus der Trennscheibenmitte über das Schneidenblatt TS3 herausgeführt werden, wie aus Figur 22 hervorgeht. Durch diese Verschraubung schneidet sich die Trennscheibe TS3 an den Nutflanken FL frei. Ein "Fressen" wird vermieden. Der Distanzring DR ist an seinem Umfang mit Nuten oder Aussparungen verschiedenster Ausgestaltung versehen, durch die das Abbrechen des Mittelsteges und die Säuberung der Verlegenut erfolgt. Durch die Aussparungen bzw. Nuten wird ein Luftdruck erzeugt, durch den die Verlegenut von Bruchstücken befreit wird. Damit ist zugleich eine Selbstreinigung der Verlegenut bei deren Herstellung erreicht. In Figur 19 sind rechteckförmige Aussparungen RA und in Figur 20 sägezahnförmige Aussparungen SA am äußeren Umfang des Distanzringes DR dargestellt. In Figur 21 erfolgt dieser Vorgang mit Hilfe von stabförmigen , flexiblen Bürsten B, durch die der Mittelsteg gebrochen und die Bruchstücke aus der Verlegenut VN herausgefördert werden.

Figur 22 verdeutlicht die seitliche Versetzung oder Verschränkung der Hartmetallzähne Z, durch die ein freier Lauf einer Trennscheibe TS3 erreicht wird. Diese Anordnung gilt für jede der Trennscheiben.

Mit derartigen Aussparungen RA kann auch ein Material ausgefräst werden, das die Eigenschaften wie Bitumen aufweist.

Gemäß einer weiteren Fortbildung kann das verlegte Mini- oder Mikrokabel aus der Verlegenut wieder entnommen werden, wobei vorher das Füllmaterial entfernt werden muss, indem ein zugfestes Trennelement zum Heben des verlegten Mini- bzw. Mikrokabels bereits beim Einlegen desselben in die Verlegenut oberhalb des Mini- bzw. Mikrokabels im Füllmaterial der Verlegenut eingeführt wird und dann beim Hebevorgang das zugfeste Trennelement herausgezogen wird, wobei die Verlegenut vom Füllmaterial mit freigelegt wird und anschließend das Mini- bzw. Mikrokabel aus der Verlegenut entnommen wird.

Die Problematik beim Heben des Mini- bzw. Mikrokabels (im weiteren wird nur der Begriff Mikrokabel verwendet) liegt darin, daß es in einer Verlegenut verläuft, die oberhalb des Mikrokabels mit einem Füllmaterial dicht und gut haftend abgedeckt ist. Dabei wird ein Füllmaterial verwendet, das zähe und haftende Eigenschaften aufweist, wie zum Beispiel Bitumen. Das Mikrokabel kann demnach nicht herausgezogen werden bevor nicht das Füllmaterial entfernt ist. Ein nochmaliges Nachfräsen der Verlegenut kommt ebenfalls nicht in Frage, da sich das Füllmaterial aufgrund seiner zähen Konsistenz nur verschmieren würde. Gemäß der Erfindung wird dieses Problem nun dadurch gelöst, daß oberhalb des Mikrokabels ein zugfestes Trennelement eingebettet wird, das bei Bedarf herausgezogen bzw. herausgerissen wird und bei diesem Vorgang das Füllmittel mit heraustrennt. Dabei ist von Vorteil, wenn das Mikrokabel von vornherein nicht mit dem Füllmittel benetzt wird, so daß dazwischen möglichst keine Haftung zustande kommt. Das zugfeste Trennelement kann als separates Element zum Beispiel in Form eines Seiles, eines Profilkörpers oder eines Bandes ausgebildet sein. Solche Trennmittel können zum Beispiel aus Kunststoff oder aus Metall wie zum Beispiel aus Stahl bestehen. Es können aber auch spezielle Trennmittel bzw. Kunststoffmaterialien um das Mikrokabel herum aufgebracht werden, wie zum Beispiel eine Kunststoffolie aus Polyethylen, so daß eine Haftung zum Füllmittel nicht oder kaum zustande kommt. Weiterhin ist für diesen Zweck möglich, daß die Verlegenut oberhalb des Mikrokabels mit einem als Füllprofil ausgebildeten Trennmittel ausgefüllt wird, das in die Verlegenut eingepreßt wird, gegebenenfalls mit zusätzlicher Abdichtung gegen die Ränder der Verlegenut. Hierfür eignet sich wiederum besonders ein zähes Material wie Bitumen. Für ein derartiges Füllprofil eignen sich besonders elastische Materialien, wie zum Beispiel Gummi oder elastische Kunststoffe.

Das zugfeste Trennelement kann aber auch als Bestandteil der Ummantelung des Mikrokabels ausgebildet sein, wobei sich das Umhüllungsmaterial leicht vom Mikrokabel abtrennen läßt, so daß beim Heben zunächst das Füllmaterial wiederum mit dem zugfesten Trennelement herausgetrennt wird.

Wenn das zugfeste Trennelement aus elektrisch leitendem Material besteht, kann es zusätzlich auch für die Stromversorgung entlang des Mikrokabels mit verwendet werden.

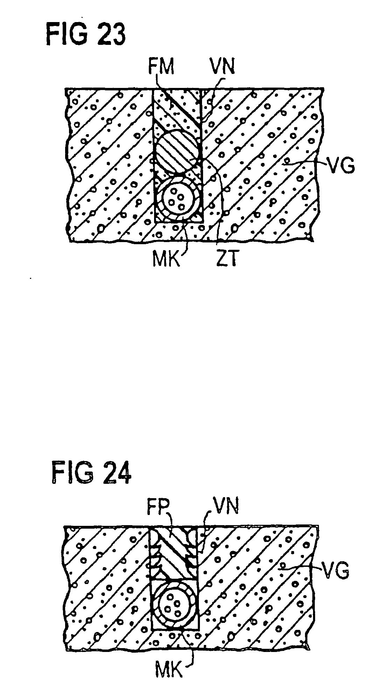

In Figur 23 ist dargestellt, daß in der eingefrästen Verlegenut VN des festen Verlegegrundes VG ein Mikrokabel MK eingeführt ist, über dem gemäß der Erfindung ein zugfestes Trennelement ZT in Form eines Seiles aus Metall oder Kunststoff bereits beim Verlegen des Mikrokabels angeordnet worden ist. Darüber ist die Verlegenut VN mit einem Füllmaterial FM wie zum Beispiel aus Bitumen dicht aufgefüllt. Vor dem Heben des Mikrokabels MK wird nun durch Herausziehen des zugfesten Trennelementes ZT das Füllmittel FM aus der Verlegenut VN mit herausgetrennt, so daß dann die Verlegenut VN frei ist und das Mikrokabel MK ohne Gefahr gehoben werden kann.

Figur 24 zeigt, daß die Verlegenut VN auch mit einem zugfesten Füllprofil FP aufgefüllt werden kann, das bei Bedarf herausgezogen wird. Dieses zugfeste Füllprofil FP kann zusätzlich mit einem Dichtungsmittel wie zum Beispiel mit Bitumen eingebracht werden, so daß eine sichere Abdichtung der Verlegenut VN erreicht wird.

Gemäß einer weiteren Fortbildung wird für ein Mini- oder Mikrokabel mit Lichtwellenleitern eine Stromversorgung geschaffen, indem die metallischen Rohre der Mikro- oder Minikabel an die zentrale Stromversorgung angeschlossen werden.

Im allgemeinen erfolgt derzeit die Stromversorgung über ein zusätzliches Stromkabel, welches von einem zentralen Punkt aus gespeist wird. Nachteilig ist, daß über eine große Strecke ein separates Stromkabel verlegt werden muß. Kosten für eine zusätzliche Kabeltrasse und Spannungsverluste müssen in Kauf genommen werden. Bei dem an sich bekannten Lichtwellenleiter-Seekabel müssen ebenfalls zusätzliche Maßnahmen für die Stromversorgung getroffen werden. Ein Mini- bzw. Mikrokabel der beschriebenen Art besteht jedoch aus einem röhrchenförmigen Metallmantel. Dieser schützt die Lichtwellenleiter vor Beschädigung bei der Verlegung, garantiert eine gewisse Überlänge der Fasern und ist querkraftstabil. Der feste Verlegegrund in den die Verlegenut eingebracht ist, gewährt außerdem dem Mini- bzw. Mikrokabel den erforderlichen Schutz gegen äußere mechanische Beeinflussungen. Die elektrischen Eigenschaften dieses Mini- bzw. Mikrokabels sind jedoch ungenutzt. Werden nun die Metallröhrchen dieser Mini- bzw. Mikrokabel an den Verbindungsstellen durchkontaktiert, wie es beispielsweise mit Hilfe von metallischen Verbindungsmuffen erfolgt, kann dieses System für eine Stromversorgung herangezogen werden. Ein zweiter Leiter kann die Rückleitung bzw. falls er isoliert ist, die Stromzuführung realisieren. Bei der Rückleitung kann gegebenenfalls auf eine Isolierung verzichtet werden. Die Rückleitung kann Schutzfunktionen zusätzlich übernehmen.

Ein derartiges Mini- bzw. Mikrokabel und die Stromversorgung können auch als zusammenhängendes Kabel gefertigt werden. Auf eine separate Rückleitung kann verzichtet werden, wenn zwei isolierte Mikrokabel verlegt werden. Es können auch zwei Mikrokabelröhrchen in einem Mikrokabel mit entsprechender gemeinsamer Isolierung verwendet werden. Der Kabelmantel isoliert die Röhrchen gegeneinander und zum Erdreich hin. Ein derartiges Mini- bzw. Mikrokabel läßt sich gut um eine Schmalachse biegen und verlegen.

Bei einer derartigen Stromversorgung wird die Festigkeit wie auch die Stromleitfähigkeit durch den Querschnitt des Kabelmantels bzw. des metallischen Rohres realisiert. Durch Verkrimpung von metallischen Dichtköpfen einer Kabelmuffe mit dem metallischen Rohr eines Mini- bzw. Mikrokabels wird eine ausreichende elektrische Durchkontaktierung garantiert. Für die Rückleitung der Stromversorgung können beispielsweise auch Kabelniederhalter herangezogen werden, wenn sie aus Metall bestehen. Diese Kabelniederhalter haben im ursprünglichen Sinn die Aufgabe das Kabel in der Verlegenut sicher in seiner Verlegehöhe zu positionieren. Bei Verwendung von Gleichstrom kann auch auf eine Rückleitung verzichtet werden, wenn geerdet wird. Wenn die metallischen Röhrchen der Mini- bzw. Mikrokabel mit einer Isolierungsschicht versehen werden, so können abgesehen von der Möglichkeit der isolierten Stromführung noch folgende Vorteile erreicht werden:

- Korrosionsschutz für das Metall

- Schutz des Metallrohres bei der Verlegung gegen mechanische Beschädigung

- sie bildet eine Abriebschicht beim Einziehen des Mikrokabels

- sie bildet eine Wärmedämmung beim Versiegeln der Verlegenut mit Heißbitumen

- sie bildet eine Vibrationsdämmung bei hohem Straßenverkehrsaufkommen.

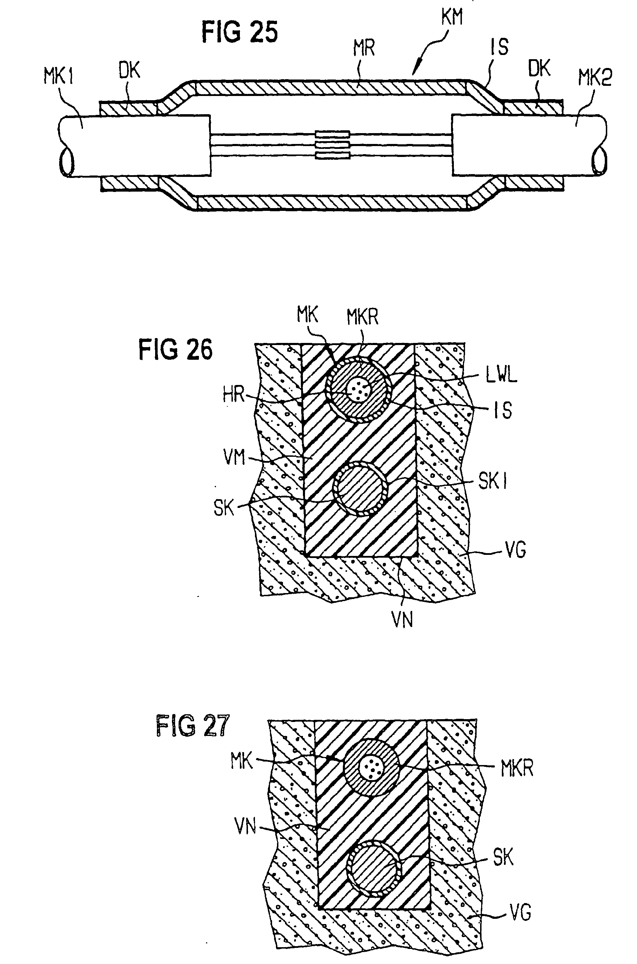

In Figur 25 wird die Durchverbindung der Stromversorgung mit Hilfe einer metallisch leitenden Kabelmuffe KM gezeigt. Die Stromversorgung erfolgt durch die Mikrokabel MK1 und MK2, deren Enden durch das Muffenrohr MR elektrisch durchverbunden werden. An den Krimpstellen der Dichtungsköpfe

DK erfolgt die Kontaktierung, die Zugentlastung und die Abdichtung der Mikrokabel MK1 bzw. MK2. In diesem Fall ist die Kabelmuffe KM auf der Außenseite zusätzlich mit einer elektrischen Isolierung IS versehen.

Figur 26 verdeutlicht in die Lage eines Mikrokabels MK, das in der Verlegenut VN oberhalb eines mit einer Isolierung SKI versehenen Stromkabels SK. Dieses Stromkabel SK ist einphasig und das Rohr MKR des Mikrokabels MK ist mit einer Kunststoffisolierung IS versehen. Die Verlegenut VN im Verlegegrund VG ist nach dem Einbringen der Kabel mit einer Vergußmasse VM aufgefüllt. Die Stromversorgung erfolgt somit über das isolierte Mikrokabel MK und das isolierte Stromkabel SK.

Figur 27 zeigt die Anordnung eines nichtisolierten Mikrokabels MK mit seinem metallischen Rohr MKR, in dem die Lichtwellenleiter angeordnet sind, oberhalb eines isolierten Stromkabels SK innerhalb einer Verlegenut VN. Das einphasige Stromversorgungskabel SK ist wiederum isoliert und das blanke Rohr MKR des Mikrokabels MK liegt gegen Erde. In diesem Fall kann auf eine Isolierung verzichtet werden.

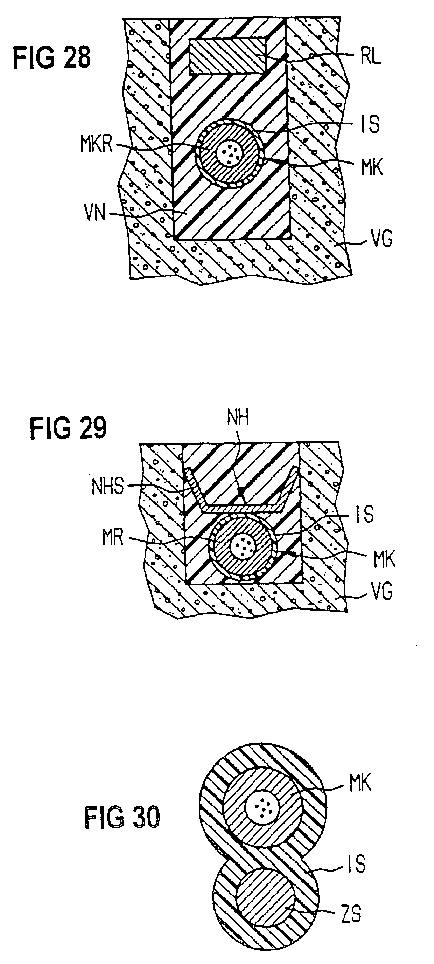

Figur 28 zeigt die Stromversorgung durch ein Mikrokabel MK, dessen Rohr MKR mit einer Isolierung IS versehen ist. Darüber sichert ein Flachbanderder als Rückleitung RL die Stromführung. In diesem Fall dient der Rückleiter RL gleichzeitig als zusätzlicher Schutz für das Mikrokabel MK.

In Figur 29 ist die Verlegung eines mit Isolierung IS versehenen Mikrokabels gezeigt, wobei hier ein durchgehender Kabelniederhalter NH das eingebrachte Kabel MK in seiner Höhenposition sichert. Der Kabelniederhalter NH weist schräggestellte Seitenwände NHS auf, die sich gegen die Nutwandung der Verlegenut VN abstützen. In diesem Fall erfolgt die Rückleitung der Stromversorgung über den Kabelniederhalter NH, der außerdem als Schutz und Absicherung nach oben dient.

Die Figur 30 verdeutlicht die Stromversorgung durch ein Mikrokabel MK, das mit einem Zusatzdraht ZS innerhalb einer Isolierung IS angeordnet ist. Dieser Zusatzdraht ZS ist elektrisch isoliert vom Mikrokabel MK. Das Material des Zusatzdrahtes ist außerdem so bestimmt, daß er als Tragdraht mit der erforderlichen Nennzugkraft verwendet werden kann. Er besteht beispielsweise aus Stahl oder Bronze.

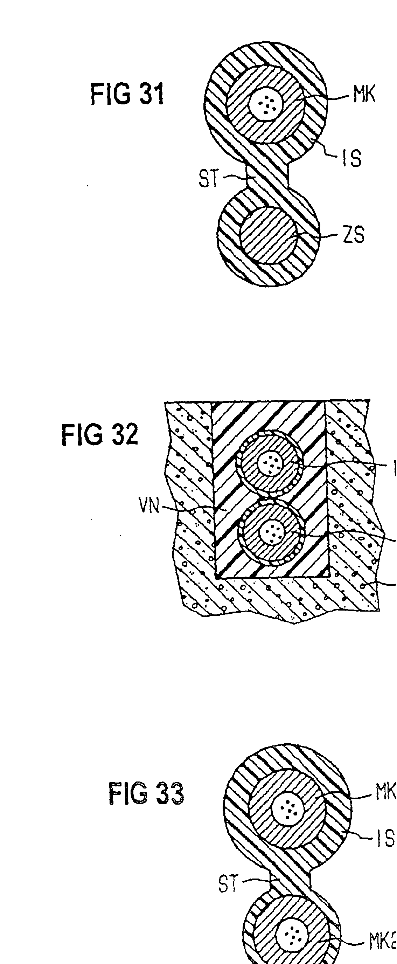

Figur 31 zeigt die Stromversorgung wiederum über ein Mikrokabel MK. An das Mikrokabel MK ist ein Zusatzdraht ZS über eine Isolierung IS angespritzt, wobei zwischen beiden die Verbindung über einen Steg ST erfolgt. Im Bereich des Steges ST kann das Mikrokabel MK von dem Zusatzdraht ZS bei Bedarf getrennt werden. Eine derartige Trennung ist zum Beispiel bei Überbrückung von Verbindungsmuffen praktisch.

Figur 32 zeigt die Anordnung von zwei übereinander liegenden Mikrokabeln MK1 und MK2 in der Verlegenut VN. Beide Mikrokabel MK1 und MK2 sind separat isoliert und können voneinander getrennt oder gemeinsam verlegt werden. Jedes Mikrokabel kann zweckmäßig an eine Einzelmuffe gespleißt und elektrisch durchverbunden werden.

Figur 33 zeigt die Stromversorgung durch zwei übereinanderliegende Mikrokabel MK1 und MK2, die separat isoliert sind, jedoch über einen Steg ST miteinander verbunden sind. Für Spleißarbeiten können die Mikrokabel MK1 und MK2 voneinander im Bereich des Steges ST getrennt werden, so daß jedes Mikrokabel MK1 bzw. MK2 in verschiedenen Einzelmuffen gespleißt und elektrisch durchverbunden werden kann.

Gemäß einer weiteren Fortbildung kann ein verlegtes Mini- bzw. Mikrokabel aufgefunden werden, indem das in einer Verlegenut verlegte optische Mini- bzw. Mikrokabel mit Hilfe eines Detektors in seinem Verlauf verfolgt wird.

Vorteile sind besonders darin zu sehen, daß mit Hilfe eines Detektors das verlegte Mini- bzw. Mikrokabel so genau vermessen werden kann, daß es zum Beispiel auch für die Archivierung in Stadt-Straßen- und Kabeltrassenplänen mit relativ geringen Toleranzen eingetragen werden kann. Durch das Verfahren mit Hilfe eines Detektors kann das im Boden befindliche Kabel auch für eine Reparatur ausfindig gemacht werden, wobei Unterbrechungen des Kabels genau lokalisiert werden können. Ebenso wichtig ist, vor dem Einfräsen der Verlegenut die Trasse zu überprüfen, ob nicht vorhandene Versorgungsleitungen im Verlegegrund bereits enthalten sind. Mit Hilfe eines solchen Verfahrens, das sich auf die Wirkungsweise geeigneter Detektoren stützt, kann also die Abnahme und die Freigabe einer neuen Kabeltrasse erfolgen, da jederzeit die Qualität der Verlegung und die Verlegetiefe festgestellt werden kann.

So ist es zweckmäßig, einen derartigen Detektor als Funktionseinheit zum Auffinden von Kabeln vor einer Fugenschneidmaschine anzuordnen, so daß in jedem Fall erkannt wird, wenn sich im Untergrund ein metallischer Gegenstand, zum Beispiel ein Kabel oder eine Versorgungsleitung, befindet. Bei der Verlegung von Mini- bzw. Mikrokabeln kann die Detektierung über das Metallrohr selbst, über eine mitgeführte Rückleitung oder auch über Kabelniederhalter in der Verlegenut erfolgen. Diese Kabelniederhalter können zum Beispiel auch für die Stromversorgung und für eine Schutzfunktion zur Auffindung des Mini- bzw. Mikrokabels herangezogen werden. Niederhalter könnten sowohl fest vorgegebenen Code haben als auch frei programmierbar sein. Zweckmäßigerweise wird für dieses Verfahren ein Servicewagen bereitgestellt, mit dem die Vermessung des verlegten Kabels durchgeführt wird. Dieses Gerät stellt den Bezug zu Markierungspunkten her, speichert die Trasse, in der das optische Kabel verlegt ist, so daß der Verlauf auf vorhandene Straßenpläne übertragen werden kann. Dabei kann sowohl die Lage wie auch die Tiefe des verlegten Mikrokabels festgestellt werden.

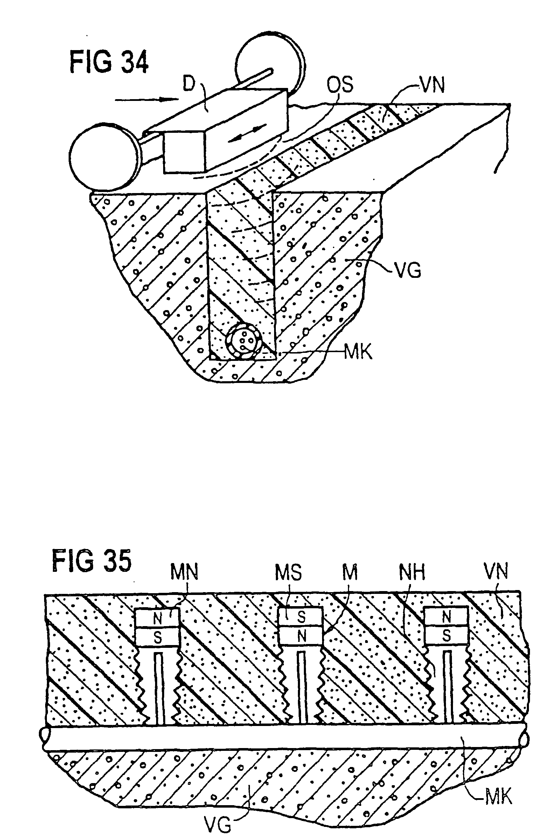

Die Figur 34 beschreibt das Prinzip des Verfahrens zum Auffinden eines optischen Kabels, insbesondere eines Mini- bzw. Mikrokabels mit Hilfe eines Detektors D, der in einem Servicewagen untergebracht ist. Beim Überfahren einer Verlegenut VN wird durch das ausgesandte und reflektierte Ortungssignal OS festgestellt, daß eine Verlegenut VN überfahren worden ist. Bei diesem Ausführungsbeispiel ist das Mikrokabel MK in die Verlegenut VN eingelegt worden und die Verlegenut VN ist anschließend mit Füllmaterial, zum Beispiel Bitumen, aufgefüllt worden, wobei dem Füllmaterial metallische Füllstoffe beigemengt sind.

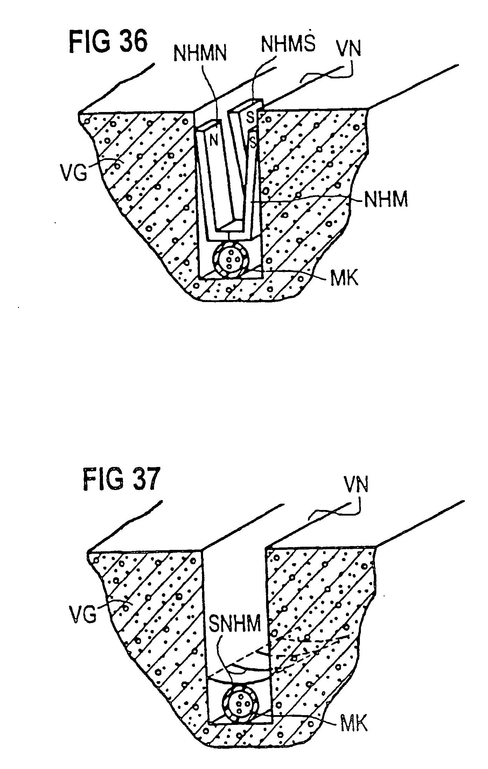

Figur 35 zeigt einen Längsschnitt durch eine Verlegenut VN in einem festen Verlegegrund VG. Das Mikrokabel MK ist auf dem Grund der Verlegenut eingebracht und wird mit Hilfe von Kabelniederhaltern NH, die dübelartig ausgebildet sind, in seiner Position gehalten. Die einzelnen Kabelniederhalter NH sind mit Magneten versehen, deren Magnetfelder von dem darüber fahrenden Detektor geortet werden können. Die Ausrichtung dieser Magnete kann bei allen Kabelniederhaltern NH gleich oder auch wechselseitig verschieden sein. Durch wechselnde Ausrichtung der Magneten M mit den Polen MN bzw. MS kann eine Systematik von wechselnden Magnetfeldern erzeugt werden, mit deren Hilfe sogar eine Codierung für das verlegte Mini- bzw. Mikrokabel festgelegt werden kann. Auf diese Weise können die verlegten Kabel genau identifiziert werden, so daß eine Verwechslung bei Reparaturarbeiten ausgeschlossen werden kann.

In Figur 36 ist ein verlegtes Mikrokabel MK in der Verlegenut VN dargestellt, das mit magnetischen Kabelniederhaltern NHN in seiner Position gehalten wird. Auch hier können Pole der magnetischen Kabelniederhalter NHM mit wechselnder Orientierung der Magnetpole NHMN bzw. NHMS in die Verlegenut VN eingeklemmt werden, so daß auch hier eine Codierung der Kabeltrasse möglich ist. Die U-förmigen Kabelniederhalter NHN verkeilen sich bei der Verlegung und stützen sich zur Nutwand ab. Die U-förmigen Kabelniederhalter sind untereinander magnetisch isoliert und werden einzeln von der Kabellegemaschine eingepreßt. Diese magnetischen Kabelniederhalter NHM können dauermagnetisch sein oder bei der Verlegung einzeln magnetisiert werden. Das Magnetfeld ist auch hier durch das Füllmaterial, das hier nicht dargestellt ist, hindurch nachweisbar.

In Figur 37 ist wiederum ein in einer Verlegenut VN verlegtes Mikrokabel MK dargestellt, das mit stabförmigen Kabelniederhaltern SNHM in seiner Position gehalten wird. Diese stabförmigen Kableniederhalter SNHM verkeilen sich ebenfalls bei der Verlegung und stützen sich an der Nutwand ab. Die stabförmigen Kabelniederhalter SNHM sind untereinander wiederum magnetisch isoliert, können dauermagnetisch sein oder erst bei der Verlegung einzeln magnetisiert werden. Auch hier besteht die Möglichkeit durch Abwechslung der Magnetpolung jedem verlegten optischen Kabel eine eigene Codierung (Morsecode) zuzuteilen. Das Magnetfeld kann auch hier in der beschriebenen Weise nach dem Verfahren gemäß der Erfindung mit einem Detektor nachgewiesen werden.

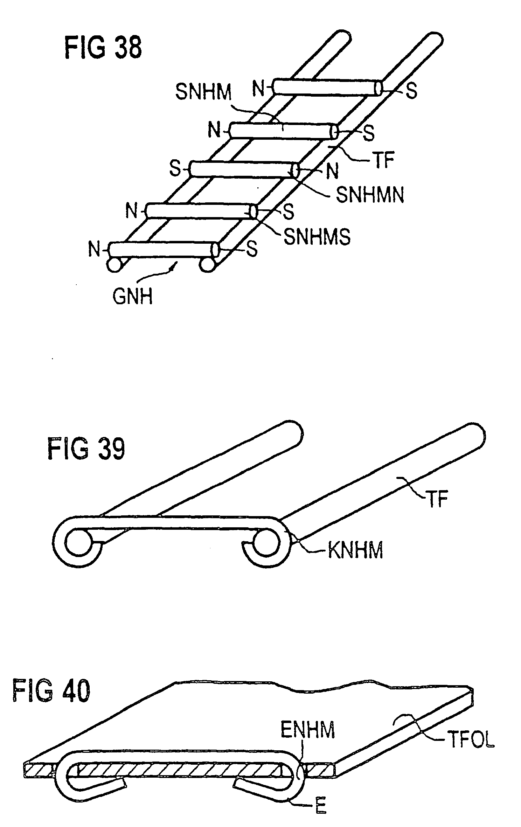

In Figur 38 ist ein gitterförmiger Kabelniederhalter GNH dargestellt. Dabei sind die stabförmigen, magnetischen Kabelniederhalter SN, HM auf zwei längsverlaufenden Trägerfäden TF befestigt, wobei die einzelnen stabförmigen, magnetischen Kabelniederhalter SNHM magnetisch voneinander isoliert sind. Beim Verlegevorgang kann dieser gitterförmige Kabelniederhalter GNH in einfacher Weise abgespult und oberhalb des Kabels klemmend eingebracht werden. Durch eine derartige Struktur ist auch in einfacher Weise eine Längenmessung der Kabeltrasse möglich, da durch den gleichmäßigen Abstand der stabförmigen Kabelniederhalter SNHM gewissermaßen ein Strichmuster geschaffen ist. Die einzelnen stabförmigen Kabelniederhalter SNHM können dauermagnetisch sein oder erst bei der Verlegung einzeln magnetisiert werden. Auch hier ist eine Codierung durch abwechselnde Magnetpolung möglich.

Die Figur 39 vermittelt, daß die Kabelniederhalter KNHM auf den Trägerfäden TF gewissermaßen aufgetackt bzw. aufgeklemmt werden können. Dies kann auch vor Ort erfolgen, wobei dann jedes beliebige Codiermuster erstellt werden kann. Eine derartige Codierung kann beispielsweise auch durch Variation des Abstandes zwischen den einzelnen stabförmigen, magnetischen Kabelniederhaltern KNHM erfolgen.

In Figur 40 ist dargestellt, daß die Kabelniederhalter ENHM auch auf eine Trägerfolie TFOL mit ihren Enden E eingeknüpft werden können. Auch hier kann die Polarität wie auch der Abstand der einzelnen stabförmigen Kabelniederhalter ENHM für eine entsprechende Codierung variiert werden. Beim Füllen der Verlegenut mit Heißbitumen schmilzt dann die Folie, so daß das Heißbitumen zwischen den stabförmigen Magneten ENHM die Verlegenut ausfüllen kann. Die stabförmigen Kabelniederhalter ENHM verbleiben eingekeilt in der Verlegenut und halten das Mikrokabel in der entsprechenden Position.

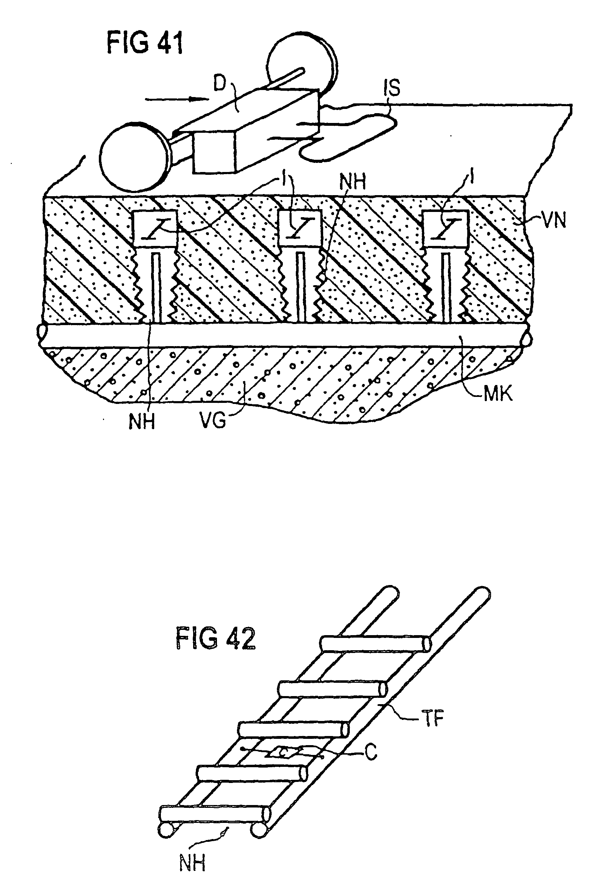

In Figur 41 wird neben der oben beschriebenen Möglichkeit einer rein passiven Codierung durch Kabelniederhalter NH eine aktive, durch elektronische Bauelemente dargestellt. Figur 41 ist aus der Figur 35 abgeleitet. Die Magnete sind jedoch durch elektronische Impulsgeber I ersetzt worden. Durch eine bewegliche Induktionsschleife IS können von der Straßenoberfläche aus die Informationen der Impulsgeber I abgefragt werden.

Die Impulsgeber I können kabelspezifische Informationen aussenden wie z.B. Betreibernamen, Trassenzugehörigkeit, Verlegetiefe, Verlegedatum, Anzahl der Lichtwellenleiter usw.

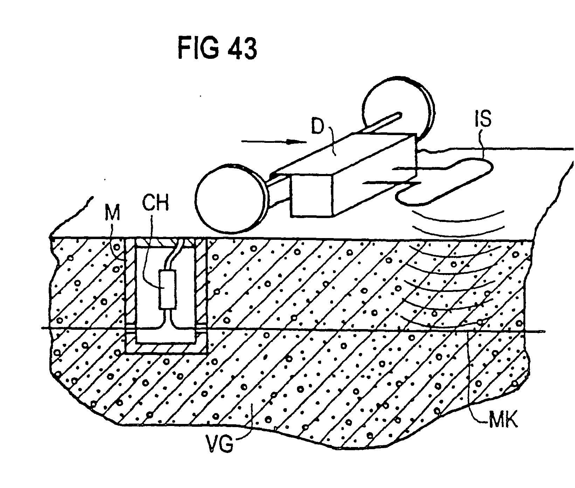

In Figur 42 wird ein freiprogrammierbarer Chip C dargestellt, welcher dem Mikrokabel MK oder der Niederhalter NH zugeordnet wird. Es kann Informationen (Kabel, Muffe, Betreiber, freie Lichtwellenleiter etc.) speichern und wiedergeben. Eine Abfrage kann induktiv über die Trägerfäden (TF) erfolgen oder durch Kontaktierung des Kabelmantels oder der Trägerfäden von der Muffe aus.

In Figur 43 ist das programmierbare Chip CH in der Muffe M untergebracht, so daß Informationen aus der Muffe ausgesendet werden. Hier können auch weitere elektronische aktive Komponenten untergebracht werden. Die Stromversorgung kann von hier aus erfolgen, wobei die Trägerflächen TF der Kabelniederhalter NH beispielsweise auch als Stromversorgungsleiter ausgebildet sein können.

Die vorgenannten optischen Kabel werden als Mikrokabel bezeichnet und werden vorzugsweise in Verlegenuten von festen Untergründen verlegt. Aufgrund ihrer geringen Durchmesser können die Verlegenuten sehr schmal gehalten werden, so daß sie mit Hilfe von Fräsverfahren hergestellt werden können. Als Verlegegründe eignen sich besonders Unterbauten und Straßen aus Asphalt oder Beton. Die Verlegetiefe ist sehr gering und liegt zwischen 7,5 bis 15 cm. Derartige Lichtwellenleiter-Kabelsysteme eignen sich besonders gut für Verlegungen bei bereits fertiggestellten Untergründen, da keine aufwendigen Grabearbeiten anfallen. Außerdem ist die Verlegezeit sehr kurz, was besonders bei Verkehrsstraßen von Vorteil ist. Nach dem Einbringen der Mikrokabel in die gefrästen Verlegenuten werden diese mit geeignetem Füllmaterial, vorzugsweise mit Bitumen, aufgefüllt. Als Verlegenuten kommen beispielsweise auch Dehnungsfugen in Frage, die zwischen einzelnen Betonplatten vorgesehen sind oder vorsorglich in Betonplatten für Straßengründe eingebracht werden. In diese Dehnungsfugen können ebenfalls Mikrokabel verlegt werden. Diese Dehnungsfugen werden ebenfalls mit Füllmaterial aufgefüllt, so daß die Mikrokabel geschützt sind.

Derartige Mikrokabel müssen jedoch auch gehoben werden können, wenn beispielsweise Reparaturen am Rohr nötig sind. Diese Mikrokabel können jedoch nicht zusammen mit dem Füllmaterial aus der Verlegenut entnommen werden, da die hierdurch benötigten Kräfte das Mikrokabel weiter schädigen würden. Außerdem muß das Rohr im Bereich der festgestellten Beschädigung saniert und anschließend wieder in die Verlegenut eingebracht werden.

Gemäß einer Weiterbildung ist es möglich, ein Mikrokabel der beschriebenen Art aus der Verlegenut zu entnehmen und zu reparieren, indem mit Hilfe eines Gerätes zum Freilegen des Mikrokabels das Füllmaterial aus der Verlegenut in einer für das Einsetzen eines Reparatursets benötigten Länge entfernt wird, wobei das Reparaturset aus zwei Kabelmuffen, zwei Ausgleichsschlaufen und einem Verbindungsrohr zwischen den Kabelmuffen gebildet wird, das Mikrokabel aus der vom Füllmaterial befreiten Verlegenut ausgehoben wird, das Rohr des Mikrokabels in der dem Reparaturset entsprechenden Länge gekürzt wird und das Reparaturset an den beiden Enden des Mikrokabels dicht angeschlossen wird.

Mikrokabel der beschriebenen Art werden im oberen Bereich von Straßen und Gehwegen gelegt. Von den Abmessungen her sind sie sehr klein und könnten deshalb bei Erdbauarbeiten leicht übersehen werden, so daß die Möglichkeit einer Beschädigung wesentlich höher ist als bei herkömmlich verlegten Nachrichtenkabeln. Es ist deshalb nötig, ein schnelles Verfahren für die Reparatur eines beschädigten Mikrokabels zu haben, mit dem in relativ einfacher Weise und in kurzer Zeit die Beschädigung behoben werden kann. Dazu ist ein Reparaturset konzipiert, das sich aus vorhandenen Standardteilen zusammensetzt, nämlich aus zwei Kabelmuffen mit einem dazwischen liegenden Verbindungsrohr, mit dem die Länge des Beschädigungsbereiches überbrückt wird, und aus zwei Anschlußeinheiten, die an die Enden des beschädigten Mikrokabels angeschlossen werden. Die Beschädigungsstelle, zum Beispiel ein durchtrenntes Rohr des Mikrokabels kann beispielsweise mit Hilfe eines elektrischen Testsignales durch Abstrahlung geortet werden. Wenn das Rohr jedoch noch metallisch verbunden ist, muß die Fehlerstelle im Lichtwellenleiter zum Beispiel mit Hilfe eines Optical Time Devision Reflektometers (OTDR) eingemessen und lokalisiert werden. Hierbei werden durch Fehlstellen im Glas (Verunreinigungen, Spleiß etc.) Teile des eingebrachten Lichtes zurückreflektiert. Wird die Laufzeit gemessen, kann der Abstand der Fehlstelle zum Sender gemessen werden.

Für die Reparatur muß das Mikrokabel zu beiden Seiten der Bruchstelle soweit freigelegt werden, daß genügend Überlänge für die Handhabung und für das Anspleißen in den Kabelmuffen vorhanden ist. Hierzu muß jedoch zunächst die Verlegenut vom Füllmaterial befreit werden, da das Mikrokabel sonst nicht ohne weitere Beschädigung gehoben werden kann. Das Freilegen der Verlegenut erfolgt durch Ausfräsen oder Ausschaben - eventuell in mehreren Schichten - oder durch Erwärmung der Vergußmasse, Ausschneiden und Entfernen mit Hilfe einer in der Verlegenut geführten Schneide, oder durch Erwärmung des Mikrokabels oder weiterer elektrisch thermisch leitender Teile, die in der Nut dicht neben dem Mikrokabel liegen können.

In jede der beiden Kabelmuffen, die zumindest im Eingangsbereich für die Aufnahme von Mikrokabeln geeignet sind, wird jeweils ein Ende des defekten Mikrokabels eingeführt und dort gespleißt mit Lichtwellenleitern, die über das Verbindungs rohr zur zweiten Kabelmuffe geführt werden. Diese Lichtwellenleiter werden dann in der zweiten Muffe mit den Lichtwellenleitern des zweiten Endes des defekten Mikrokabels gespleißt. Die Kabelmuffen werden zweckmäßigerweise in Kernbohrungen eingesenkt, die tangential neben der freigelegten Verlegenut eingefräst werden. Die Einführungen der zylindrischen Kabelmuffen sind tangential am Muffenzylinder angeordnet, so daß die Einführungen der Mikrokabelanschlüsse in Form von Ausgleichsschlaufen nur leicht ausgelenkt werden müssen. Die Mikrokabelanschlüsse bestehen ebenfalls aus Rohren und sind als Ausgleichsschlaufen ausgebildet, so daß Toleranzen und Längsdehnungen beim Einsetzen der Muffen und während des Betriebs ausgeglichen werden können. Die dichten Verbindungen zu den Mikrokabeln werden durch Aufkrimpen der Enden der Ausgleichsschlaufen auf die Enden des Mikrokabels hergestellt. Nach diesen Vorgängen kann die Verlegenut wieder mit Füllmaterial aufgefüllt werden.

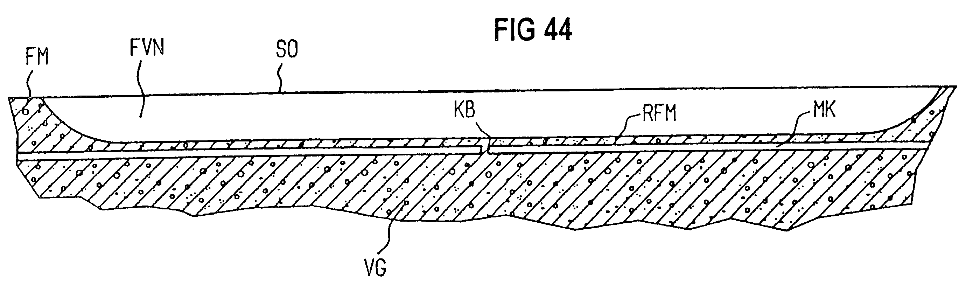

In Figur 44 ist ein Kabelbruch KB eines Mikrokabels NK dargestellt, wobei die Füllmasse bereits aus der Verlegenut in einer für die Reparatur erforderlichen Länge entfernt worden ist. In der freigelegten Verlegenut FVN, die zum Beispiel in einem festen Verlegegrund VG einer Straße eingebracht ist, befindet sich nurmehr eine geringe Schicht von Füllmasse oberhalb des Mikrokabels MK, die aus Sicherheitsgründen nicht vollends entfernt wird, so daß keine mechanische Verletzung des Mikrokabels NK durch das Werkzeug entsteht. Hierzu eignet sich eine entsprechende Steuerung wie sie später noch erläutert wird. Die Verlegenut mit dem fast freigelegten Mikrokabel MK ist nun von der Straßenoberfläche SO zugänglich, so daß nun die beiden Enden des zu reparierenden Mikrokabels MK in einfacher und schonender Weise entnommen werden können.

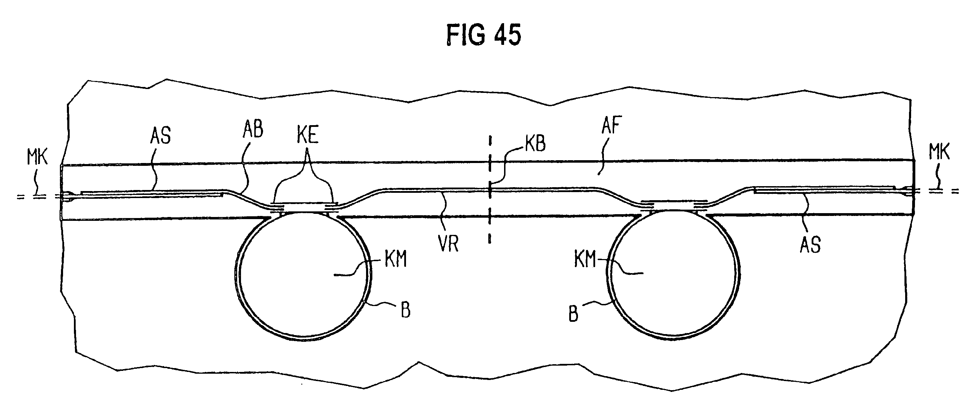

Figur 45 verdeutlicht das bereits ausgeführte Verfahren zur Reparatur eines an der Stelle KB gebrochenen Mikrokabels MK, wobei hier die freigelegte Verlegenut FVN von oben betrachtet wird. Es ist zu erkennen, daß in einem für die Lichtwellenleiter-Überlängen benötigten Abstand zwei Kernbohrungen B nahezu tangential neben der freigelegten Verlegenut FVN senkrecht in den Verlegegrund eingebohrt worden sind, in die jeweils eine zylindrische Kabelmuffe KM eingesetzt worden ist. Diese Kabelmuffen KM sind für die Aufnahme von Mikrokabeln konzipiert und besitzen tangential einlaufende Kabelmuffeneingänge KE, an die rohrförmige Ausgleichsschlaufen AS angeschlossen werden. Diese rohrförmigen Ausgleichsschlaufen AS sind im Durchmesser dem Durchmesser des Mikrokabels MK angepaßt, wobei die dichten Verbindungen meist durch Aufkrimpungen AK erfolgen. Die Ausgleichsschlaufen AS dienen zum Toleranz- und Dehnungsausgleich. Da die Kabelmuffen KM tangentiale Kabeleinführungen KE aufweisen, können die Ausgleichsschlaufen AS mit nur geringen Ausbiegungen angesetzt werden, so daß sie knicklos und spannungsfrei in die freigelegte Verlegenut FVN geführt werden.

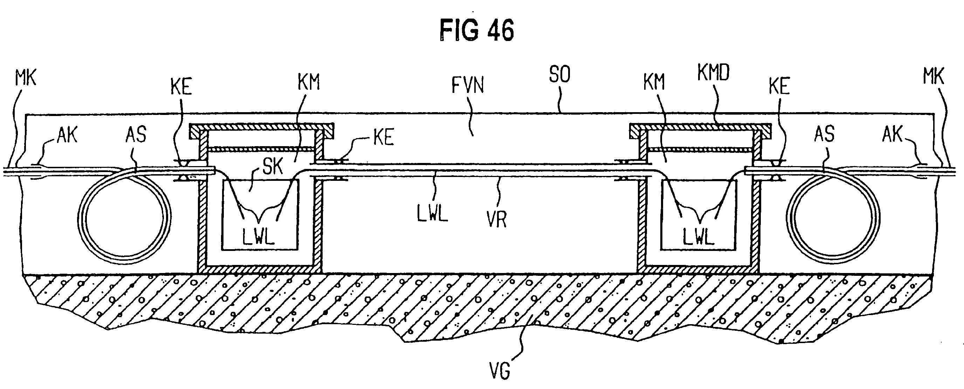

Die Figur 46 zeigt die Anordnung nach dem ausgeführten Reparaturverfahren und stellt die Anordnung nach Figur 45 in einem Längsschnitt dar, wobei übersichtshalber die Kabelmuffen in geschnittener und vereinfachter Form dargestellt sind, um die Verhältnisse besser zeigen zu können. So wird erkennbar, daß die Ausgleichsschlaufen AS einerseits an den Rohrenden des zu reparierenden Mikrokabels MK und andererseits an den Kabeleingängen KE der Kabelmuffen KM mittels Aufkrimpungen AK angeschlossen sind. Die Lichtwellenleiter LWL des Mikrokabels MK werden durch die Ausgleichsschlaufen AS jeweils der entsprechenden Kabelmuffe KM zugeführt und dort auf Spleißkassetten SK mit Lichtwellenleitern LWL, die zur jeweils zweiten Kabelmuffe KM über das Verbindungsrohr VR führen, zusammengespleißt. Auf diese Weise können alle Verbindungen wieder hergestellt werden. Nachdem die Kabelmuffen KM verschlossen sind, kann die vorher freigelegte Verlegenut FVN wieder mit Füllmaterial aufgefüllt werden.

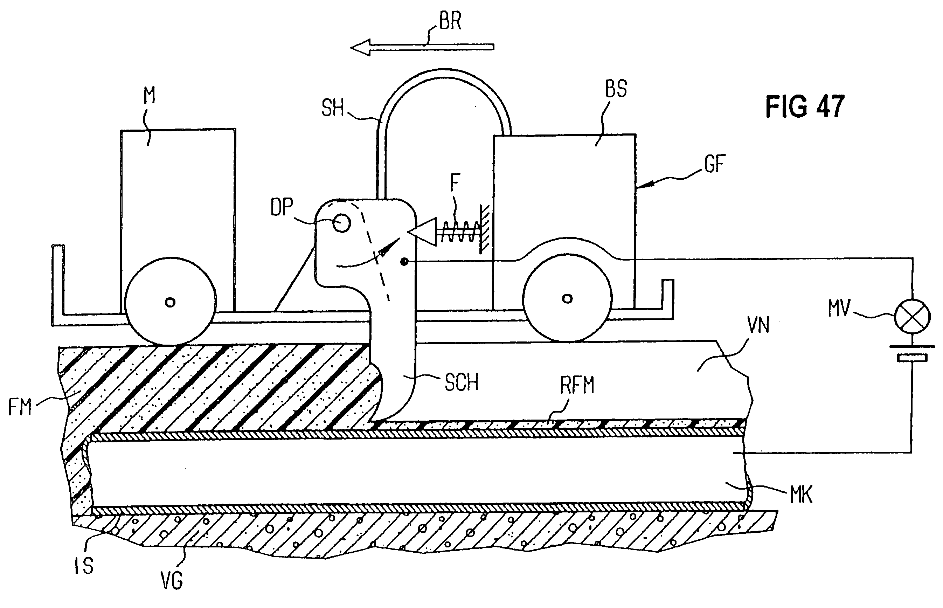

Figur 47 zeigt ein Gerät GF zum Entfernen der Füllmasse FM aus der in einen festen Verlegegrund VF eingebrachten Verlegenut VN. Am Grund dieser Verlegenut VN ist ein Mikrokabel MK eingelegt, das beispielsweise wegen Rohrbruch gehoben werden muß. In diesem Fall ist das Mikrokabel MK mit einer Isolationsschicht IS versehen. Zum Entfernen der Füllmasse FM wird bei diesem Verfahren eine beheizte Schneide SCH verwendet, die kardanisch, das heißt drehbar, an einem Drehpunkt DP des Gerätes GF gelagert ist und damit Ungenauigkeiten bei der Führung der Schneide ausgleicht. Außerdem ist ein Federwerk F angeordnet, das so ausgelegt ist, daß die Schneide SCH nach oben auskippen kann, wenn die Aushubkraft einen einstellbaren Wert überschreitet. Diese Schneide SCH ist auf einem fahrbaren Gerät GF montiert und wird beispielsweise von einem Behälter für Brennstoff BS über eine Verbindungsleitung SH beheizt. Ein Motor M sorgt für die Fortbewegung des Gerätes GF oberhalb der Verlegenut VN auf der Straßenoberfläche. Mit einer elektrischen Meßvorrichtung MV wird während des Verfahrens überwacht, daß das Mikrokabel nicht zusätzlich durch die zu tief angesetzte Schneide SCH beschädigt wird, wobei das Rohr des Mikrokabels MK und die metallische Schneide SCH an einen Durchgangsprüfer angeschlossen werden. Wird nun die Isolationsschicht IS durch die Schneide SCH verletzt, spricht die Meßvorrichtung MV an und die Eingriffstiefe der Schneide SCH kann daraufhin korrigiert werden. Die Freilegung kann auch schichtweise erfolgen.

Für die Freilegung des Mikrokabels in der Verlegenut können noch weitere Hilfen vorgesehen werden. So kann zum Beispiel die Isolation des Mikrokabels als eine Art Reißverschluß ausgebildet werden, so daß das Rohr selbst beim Auffüllen mit Dichtungsmaterial mit diesem nicht in Berührung kommt. Nach Entfernung des Füllmaterials und nach dem Öffnen des "Reißverschlusses" kann das Mikrokabel völlig frei aus der Isolation entnommen werden. Weiterhin kann auch ein Reißdraht oberhalb des Mikrokabels in die Verlegenut eingebracht werden, mit dessen Hilfe das Füllmaterial herausgerissen werden kann. Wenn durchgehende Kabelniederhalter oberhalb des Mikrokabels beim Verlegen eingesetzt worden sind, können auch diese Kabelniederhalter zum Heraustrennen des Füllmaterials herangezogen werden.

Wenn das Mikrokabel eine Isolation aufweist, eignet sich diese Isolation hervorragend als Trennmittel zwischen dem metallischen Rohr des Mikrokabels und dem gut haftenden Füllmaterial (zum Beispiel Bitumen), welches die Verlegenut versiegelt. Ein Kabelmantel aus Polyethylen, Papier oder einem Quellvlies wirkt bei der Freilegung des Mikrokabels wie ein Reißverschluß, da diese Materialien auf dem Rohr nicht haften, während die Materialien zum Bitumen gut haften. Ein solcher Kabelmantel wirkt somit als Trennmittel zwischen dem Metallrohr und dem Füllmaterial. Das Metallrohr des Mikrokabels sollte eine glatte Oberfläche aufweisen um die Haftung zu reduzieren. Die Verlegenut wird in der vorher beschriebenen Art bereits freigelegt, die Isolation bleibt jedoch in der Verlegenut zurück.

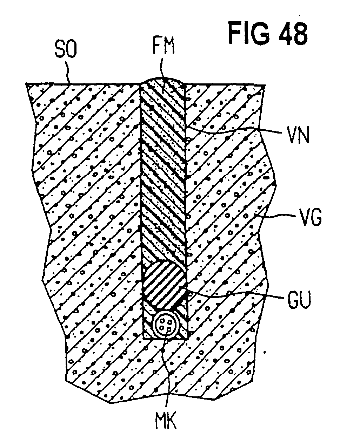

Als Trennmittel zwischen dem Mikrokabel MK und dem Füllmaterial FM kann auch eine Schnur aus Moosgummi GU eingelegt werden, wie die Figur 48 zeigt. Bei einer solchen Anordnung müßte dann die Schneide des Verlegegerätes nicht beheizt werden. Es kann auch ein besonders starker Kabelmantel verwendet werden. Auch kann der Kabelmantel zusätzlich aufgedickt werden.

Nach dem gleichen Verfahren wäre auch ein Füllmaterial aus einer Verlegenut zu entfernen, die zwischen den einzelnen Platten einer Betonfahrbahn oder in Dehnungsfugen von befahrbaren Platten eingebracht sind. Damit könnte auch auf das Einbringen einer zusätzlichen Nut mit Hilfe einer Frässcheibe bei Betonstraßen verzichtet werden. Wenn diese Nuten im Beton ein Maß aufweisen, das etwa dem Durchmesser eines Mikrokabels entspricht, können diese ohne weitere Maßnahmen in diese bereits vorhandenen Nuten eingebracht werden. Anschließend werden diese Nuten dann ebenfalls mit Füllmaterial aufgefüllt und versiegelt. Nachdem derartige Versiegelungen in den Nuten der Betonplatten aus Sicherheitsgründen in gewissen zeitlichen Abständen erneuert werden müssen, bietet sich die Möglichkeit bei derartigen Anlässen neue Mikrokabel ohne zusätzlichen Kostenaufwand zu verlegen, wobei auch eine zeitliche Ersparnis eine Rolle spielt. Außerdem würde der Straßenaufbau nicht durch zusätzliche Verlegenuten für das Mikrokabel geschwächt. Eventuell könnten die Dehnfugen durch Schleifen vertieft oder erweitert werden.

Betonfahrbahnen werden unmittelbar nach dem Vergießen durch Scheinfugen in einzelne Platten von einer Größe 7,5 m bis 20 m aufgeteilt. Diese Scheinfugen sind Sollbruchstellen, die durch ca. 5 bis 10 cm tiefe und ca. 8 - 10 mm breite Einfräsungen hergestellt werden. Gegen Schmutz und Oberflächenwasser werden die Scheinfugen mit Dichtband, Moosgummi oder Füllbitumen versiegelt. Derartige Nuten eignen sich ebenfalls für die Verlegung von Mikrokabeln. Zum Schutz der darin verlegten Mikrokabel und um Versetzungen durch die Bodenmechanik ausgleichen zu können, ist es zweckmäßig, an jeder Stoßstelle der Betonplatten die Scheinfuge zu erweitern, so daß das Mikrokabel in diesen Bereichen ausreichende Ausgleichsmöglichkeiten besitzt. Hierfür würde eine Kernbohrung mit einem Durchmesser von 8 bis 10 cm ausreichen, um das eingelegte Mikrokabel zu schützen, wenn Fahrbahnplatten durch Bodensenkungen, Erdbeben oder ähnlichen Bodenbewegungen sich gegeneinander verschieben. Ein Abscheren oder Ausknicken des verlegten Mikrokabels wäre damit weitgehend auszuschließen.

Die Länge des Reparatursets richtet sich nach der Schadstelle. Um genügend Faserüberlänge zu haben, ist für jede Muffe ca. 1,5 m Faservorrat einzurechnen. Das Verbindungsrohr VR und damit die Länge des Reparatursets ist immer 3m länger als die zu überbrückende Bruchstelle.

Die Erwärmung des Füllmaterials kann beispielsweise auch durch Erwärmung von stromdurchflossenen Leitern erfolgen, die im Füllmaterial eingesetzt worden sind. Hierzu können beispielsweise die Kabelniederhalter herangezogen werden.

Gemäß einer weiteren Fortbildung wird das Mikrokabel kontinuierlich fortlaufend während des Verlegevorgangs fixiert, indem das Mikrokabel mit Hilfe eines fortlaufenden Profilkörpers aus elastischem Material in einer im Verlegegrund eingebrachten Verlegenut fixiert wird und die Verlegenut durch Einbringen eines Dichtmittels abgedichtet wird.

So wird nun das Mikrokabel in einfacher Weise und am besten bereits im Anschluß an das Einlegen des Mikrokabels in die Verlegenut durch Einlaufen eines fortlaufenden Profilkörpers im Nutgrund der Verlegenut fixiert. Der fortlaufende, langgestreckte Profilkörper besteht vorzugsweise aus einem extrudierten, gummiartigen Kunststoff, der meist als Moosgummi bezeichnet wird. Beim Einpressen dieses Profilkörpers in die Verlegenut wird dieser elastisch verformt und verkeilt sich dabei durch die elastische Vorspannung gegen die Nutwandungen der Verlegenut. Dabei werden Unebenheiten durch das elastische Material ausgeglichen. Das Material besteht aus einem unverrottbaren, temperatur- und UV-stabilen Weichgummi. Bei Bedarf kann dieser Profilkörper nach oben hin zusätzlich mit einem Dichtungsmittel, zum Beispiel mit Heißbitumen versiegelt werden. Auf diese Weise wird der Profilkörper zusätzlich mechanisch in der Nut fixiert. Hierdurch ergeben sich folgende Vorteile gegenüber Niederhaltern aus Metallklammern oder ähnlichen Elementen:

- Es wird weniger Heißbitumen bei der Versiegelung benötigt.

- Es erfolgt eine schnelle, unter Umständen sofort nachfolgende Verlegung des Profilkörpers.

- Der Verlegevorgang kann kontinuierlich ablaufen.

- Hierdurch erfolgt bereits eine grobe Abdichtung gegen Oberflächenwasser.

- Dehnungen im Verlegegrund können durch das elastische Material des Profilkörpers aufgenommen werden.

- Es erfolgt nur eine geringe Schrumpfung des Heißbitumens im Versiegelungsbereich, so daß ein "Nachsacken" kaum erfolgt.

- Die Nutfüllung, bestehend aus dem Profilkörper und dem Abdichtmittel, kann leicht wieder entfernt werden, da sich eine Art Reißverschlußfunktion einstellt.

Hauptzweck dieses Aspekts ist es, das Mikrokabel in der Verlegenut mit Hilfe eines Profilkörpers zu fixieren. Des weiteren wird die Nut zur Straßendecke hin abgedichtet und das Kabel vor mechanischer Belastung und Vibration geschützt.

Als einfachstes Ausführungsbeispiel wird ein elastischer Profilkörper mit kreisförmigem Querschnitt verwendet, der direkt über dem Mikrokabel beispielsweise mit einer Rolle oder Walze eingepreßt wird, wobei der verbleibende Freiraum der Verlegenut nach oben hin mit einem Heißbitumen dicht verschlossen wird. Durch das Einpressen des Profilkörpers werden infolge der elastischen Eigenschaften des Profilkörpers auch die Hohlräume zwischen dem Mikrokabel und den Verlegewandungen ausgefüllt.

Vorteilhaft ist auch ein Ausführungsbeispiel, bei dem das Mikrokabel bereits mit einem elastischen Profilkörper ummantelt wird.

Es sind jedoch auch formstabile, elastisch bedingt verformbare Dichtungsprofile verwendbar, die dann verformbare Anformungen, zum Beispiel Wiederhaken aufweisen, durch die ein Verklemmen und Verhaken zu den Nutwandungen und zu Unebenheiten in der Verlegenut erfolgt.

Als Dichtmittel zur Abdichtung der Verlegenut gegen Eindringen von Wasser werden vorzugsweise wärmeerweichbare Materialien verwendet, wie zum Beispiel Schmelz- oder Heißbitumen oder an sich bekannte Schmelzkleber z.B. aus Polyamid. Diese Dichtmittel werden nach dem Einlegen des Mikrokabels in die Verlegenut unter Erwärmung eingebracht, wobei dann nach dem Erstarren die Verlegenut versiegelt ist.

Es können auch temperatur- und formstabile Profilkörper verwendet werden, in denen Freikanäle angeordnet sind, in die Mikrokabel oder auch freie Lichtwellenleiter eingezogen werden. Das Einbringen von Lichtwellenleitern erfolgt dann beispielsweise durch Einblasen oder Einziehen von Kabeln, Fasern oder Faserelementen, wobei diese Vorgänge vor oder auch nach dem Einlegen des Profilkörpers erfolgen können.

Somit läßt sich also ein Mikrokabel in seiner Verlegenut durch einen fortlaufenden Profilkörper in einfacher Weise fixieren, wobei die gefrästen Verlegenuten im festen verlegegrund, wie zum Beispiel einer Straße, wasserdicht verschlossen werden. Die Mikrokabel lassen sich bei Verwendung solcher Profilkörper besser verlegen und bei einer eventuell erforderlichen Reparatur können diese Profilkörper leicht wieder aus der Verlegenut entnommen werden. Durch die Profilkörper, die über dem Mikrokabel eingelegt werden, erfolgt gleichzeitig ein Schutz gegen hohe Temperaturen (230 bis 280° C), die beim Eindringen des Heißbitumens bzw. des Schmelzklebers auftreten können. Außerdem können in gewissen Grenzen auch Längenänderungen bei Versetzungen in der Straße (Bodensenkungen) oder bei unterschiedlichen Wärmeausdehnungen von Kabel und Straßenbelag durch den Profilkörper ausgeglichen werden.

Die Mikrokabel können jedoch auch mit einem Mantel aus weichem, möglichst verzelltem oder geschäumten Kunststoff bei der Fertigung versehen werden, so daß dieser Mantel bereits die Funktion der Profilkörper übernimmt. Das Niederhalten eines solchen Mikrokabels erfolgt dann durch den aufgebrachten Mantel, der sich in gleicher Weise gegen die Nutwandungen verpreßt.

So können die Profilkörper als endloses Profil ohne Stöße in die Verlegenut eingegeben werden, wobei die Profilkörper zweckmäßigerweise mit Signalfarbe eingefärbt werden, so daß gleichzeitig eine Warnung bei nachfolgenden Straßenarbeiten gegeben ist. Außerdem wird das Mikrokabel nach oben hin elastisch abgedichtet, so daß das Mikrokabel vor mechanischer Belastung (Vibration) entkoppelt wird. Bei Verwendung eines Profilkörpers, der das Mikrokabel ganz umschließt ergibt sich ein gleichmäßiger Radialdruck, so daß das Kabel spannungsfrei ausgerichtet wird. Dadurch, daß die langgestreckten Profilkörper das Mikrokabel gleichmäßig niederhalten, ist ein Aufsteigen durch Eigenspannung der Mikrokabels nicht mehr möglich. Im übrigen wird das Mikrokabel beim Verlegen keiner Längsspannung ausgesetzt, die eventuell zu Dehnungen oder Zugbeanspruchungen der Lichtwellenleiter-Fasern führen könnte. Beim Verlegevorgang wird das Mikrokabel sehr genau geführt, so daß bei thermischen oder mechanischen Belastungen das Kabel nicht ausgelenkt oder geknickt werden kann. Im übrigen erfolgt durch die elastischen Eigenschaften der Profilkörper beim Einpressen in die Verlegenut ein lückenloses Ausfügen der Zwickel zur Nutenwand hin.

Das Mikrokabel kann bereits bei der Herstellung mit einem aufextrudierten Mantel versehen werden. Es ist jedoch auch nachträglich kurz vor der Verlegung des Mikrokabels ein Aufbringen einer zylindrischen Umhüllung möglich, wobei diese Umhüllung vorzugsweise geschlitzt ist, so daß sie auf das Mikrokabel aufgerastet werden kann.

Die eingesetzten Profilkörper können bei Reparaturarbeiten in einfacher Weise mit Hilfe eines Meißels oder Messers herausgeschnitten werden, so daß das zu reparierende Mikrokabel in einfacher Weise gehoben werden kann.

In einer Verlegenut können auch mehrere Mikrokabel übereinander angeordnet werden, wobei sich hier die Möglichkeit eröffnet, einen Profilkörper zu verwenden, der mehrere längsgerichtete Freikanäle aufweist.

Es können auch nachträglich weitere Mikrokabel in eine Verlegenut eingebracht werden, wobei dann zunächst der Profilkörper entfernt wird, um Platz für das weitere Mikrokabel zu schaffen. Anschließend wird dann ein Profilkörper eingepreßt, der wiederum mit einem Dichtmittel nach oben hin abgeschlossen wird.

Bei Verwendung von relativ harten Profilkörpern können zusätzliche Freikanäle in Längsrichtung verlaufen, die zu einer späteren Zeit mit Fasern versehen werden können, die beispielsweise eingeblasen werden.

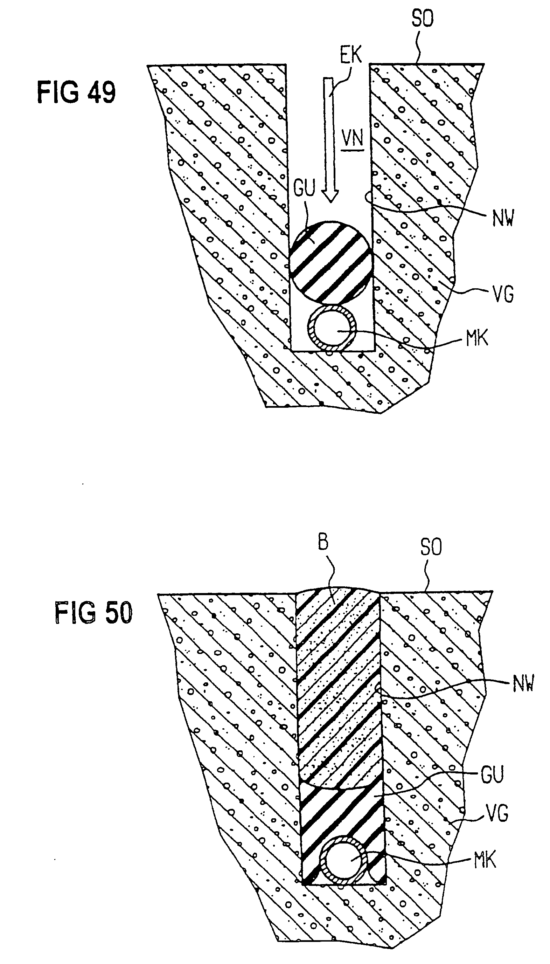

In Figur 49 wird eine Verlegenut VN in einem festen Verlegegrund VG, zum Beispiel einem Straßenbelag gezeigt. In dieser Verlegenut VN ist bereits das Mikrokabel MK im Nutgrund eingeführt. Darüber wurde, wie der Pfeil EK andeutet, als Niederhalter für das Mikrokabel MK ein fortlaufender Profilkörper GU aus elastischem Material, wie zum Beispiel Gummi, eingeführt.

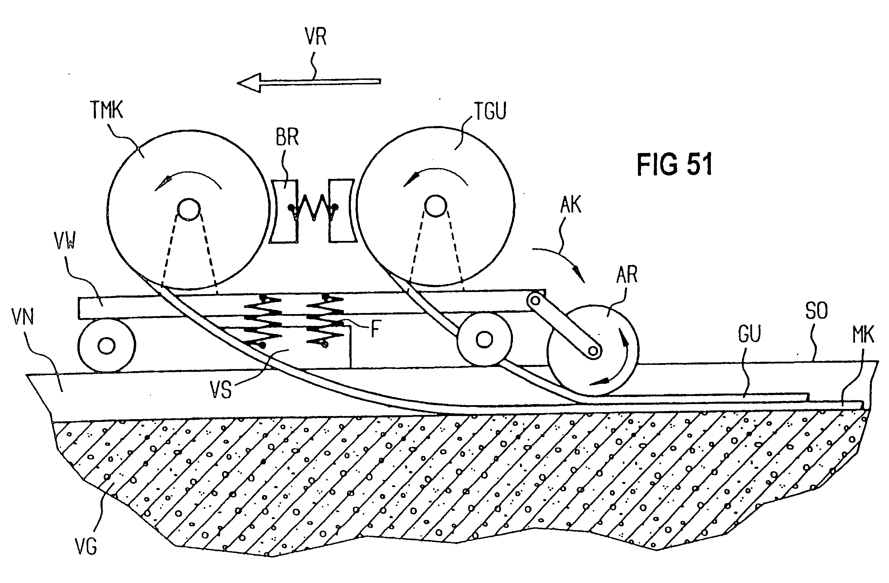

In Figur 50 wird nun gezeigt, daß sich der Profilkörper GU durch Einpressen an das Mikrokabel MK und die Nutenwand NW anfügt. Die weitere Verlegenut wird nach oben hin bis zur Straßenoberfläche SO mit einem Dichtmittel B, zum Beispiel einem heißschmelzenden Bitumen, dicht aufgefüllt.

In Figur 51 wird schematisch die Funktion einer Verlegeeinheit VW gezeigt. Auf der linken Seite wird das Mikrokabel MK direkt von einer Trommel TMK abgespult, so daß sich das Mikrokabel leicht in die Verlegenut einlegen läßt. Dabei werden unnötige Verformungen des Mikrokabels vermieden. Ein Verlegeschuh VS vermeidet das Aufsteigen des Mikrokabels MK aus der Verlegenut. Auf der rechten Seite der Verlegeeinheit VW ist eine zweite Trommel TGU für den Profilkörper GU angebracht, der durch eine Andruckrolle AR in die Verlegenut VN oberhalb des Mikrokabels MK fortlaufend eingepreßt wird. Auf diese Weise ist in einfacher Art in einem Verlegevorgang das Mikrokabel MK in der Verlegenut VN eingelegt und durch den Profilkörper fixiert. Der Verlegeschuh VS wird mit Hilfe einer Federkonstruktion F in Position gehalten und eine Bremsvorrichtung BR sorgt für eine definierte Abzugsgeschwindigkeit beider Trommeln TMK und TGU. Schließlich ist durch einen Pfeil die Verlegerichtung VR angedeutet.

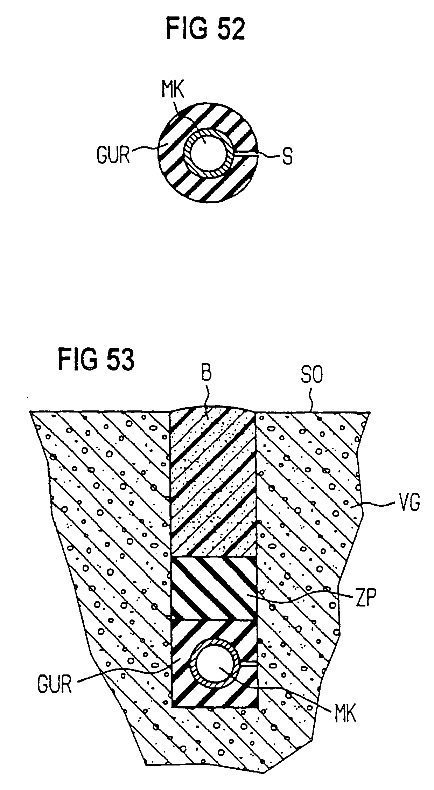

Figur 52 zeigt ein Mikrokabel MK, das bereits mit einem langgestreckten, ringförmigen Profilkörper GUR versehen ist. Dieser Profilkörper kann entweder bereits bei der Herstellung auf das Mikrokabel MK aufextrudiert werden oder nachträglich aufgezogen werden. Beim nachträglichen Aufziehen des Profilkörpers GUR ist zweckmäßig, einen Längsschlitz S vorzusehen, so daß der Profilkörper GUR durch Aufdehnung auf das Mikrokabel MK aufgerastet werden kann. Die Kanten des Längsschlitzes S sind zweckmäßigerweise angefast, so daß das Aufrasten erleichtert wird.

Figur 53 zeigt ein verlegtes Mikrokabel MK mit aufgezogenem Profilkörper GUR, der durch Einpressen so deformiert ist, daß Hohlräume weitgehend ausgeschlossen sind. Bei dieser Ausführungsform ist weiterhin ein Zusatzprofil ZP eingebracht, das die Verlegenut nach oben hin weiter abschließt. Beide Profilkörper sind aus elastisch oder plastischem Material, so daß sie gut verformbar sind. Der Rest der Verlegenut VG ist wiederum mit einem Dichtmittel, zum Beispiel Heißbitumen B, verschlossen und versiegelt. Wenn ein Mikrokabel MK wieder gehoben werden soll, so wird mit Hilfe eines Meißels das Dichtmittel B mechanisch entfernt und aus der Verlegenut herausgenommen. Da eine feste Haftung lediglich zwischen dem Dichtmittel und der Nutwandung besteht, kann nach Entnahme des Dichtmittels der Profilkörper in einfacher Weise herausgezogen werden. Damit ist das zu reparierende Mikrokabel MK wieder frei zugänglich.

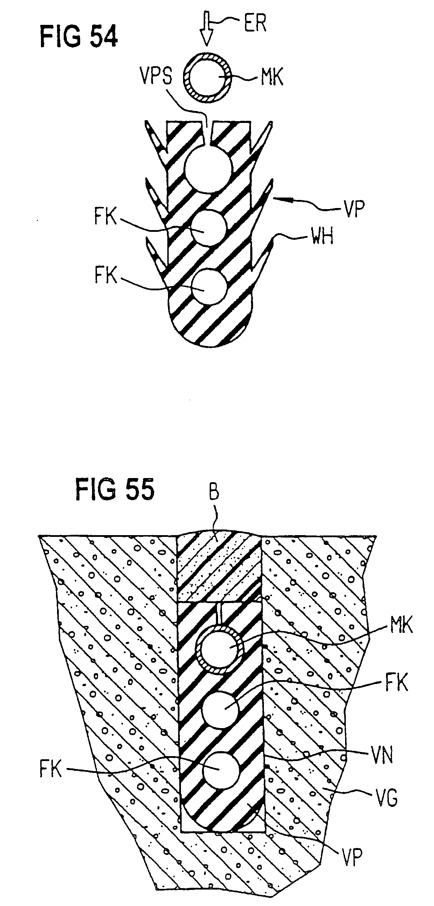

Figur 54 zeigt den Querschnitt durch einen langgestreckten Profilkörper VP aus einem Vollprofil, das sich elastisch verhält, jedoch nicht plastisch verformbar ist. Durch elastische Widerhaken WH fixiert sich der Profilkörper in der Verlegenut. Innerhalb des Profilkörpers VP sind längs verlaufende Freikanäle FK angeordnet, in die später Fasern eingezogen oder eingeblasen werden können. Im oberen Bereich des Profilkörpers VP ist ein Kanal für ein Mikrokabel MK vorgesehen, das durch einen längs verlaufenden Schlitz VPS vor dem Verlegen in den Profilkörper VP in Richtung GR eingelassen wird.

Die Figur 55 zeigt den Profilkörper VP der Figur 54 innerhalb der Verlegenut VN, wobei sich die elastischen Widerhaken WH entlang der Nutwandung verkeilt haben. In die Freikanäle FK des Profilkörpers VP können eventuell nachträglich zu einem späteren Zeitpunkt zusätzliche Lichtwellenleiter eingezogen oder eingeblasen werden. Der obere Teil der Verlegenut VN ist wiederum mit einem Dichtmittel B aufgefüllt.

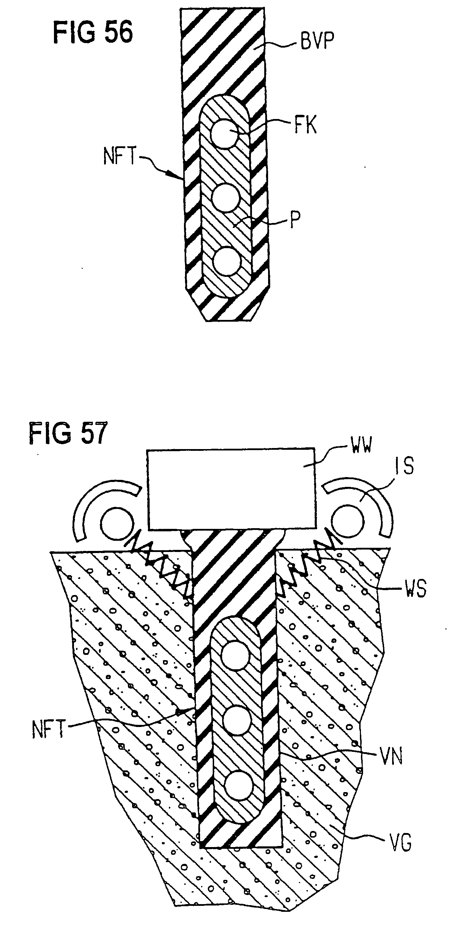

In Figur 56 wird ein Querschnitt eines Profilkörpers P gezeigt, der sich ebenfalls elastisch verhält, jedoch nicht plastisch verformbar ist und mit einem schmelzbaren Dichtmittel BVP, zum Beispiel aus Heißbitumen oder Heißschmelzkleber, werksseitig bereits ummantelt ist. Dieses Nutformteil NFT wird vor der Verlegung erwärmt, so daß es heiß in die Verlegenut eingewalzt werden kann. Im Profilkörper P sind wiederum Freikanäle vorgesehen, wobei jedoch auch hier ein geschlitzter Kanal zur Aufnahme eines Mikrokabels vorgesehen werden kann.

Die Figur 57 zeigt den Verlegevorgang für ein Nutformteil NFT nach Figur 56. Hier wird eine Warmwalze WW verwendet, durch die das erwärmte Nutformteil NFT in die Verlegenut VN eingepreßt wird. Zweckmäßigerweise erfolgt die Erwärmung des den Profilkörper ummantelnden Dichtmittels durch Wärmestrahlung WS von Infrarotstrahlern IS. Vor der Verlegung wird auch die Verlegenut VN erwärmt, um ein zu schnelles Abkühlen des Dichtmittels zu vermeiden. Abschließend wird das überschüssige Dichtmittel an der Straßenoberfläche eingewalzt und abgezogen.

Gemäß einer Weiterbildung wird das verlegte Mini- oder Mikrokabel ausreichend gegen Verletzung durch Eindringen von spitzen und sehr scharfkantigen Gegenständen geschützt, indem nach dem Einbringen des Mini- bzw. Mikrokabels in die Verlegenut ein elastisches, kerbschlagzähes, durch mechanische Eingriffe von außen schwer durchtrennbares Abdeckprofil in Längsrichtung des Mini- bzw. Mikrokabels eingelegt wird und dabei die Breite der Verlegenut überdeckt wird.

Die Vorteile bestehen im Wesentlichen darin, dass bereits beim eigentlichen Verlegevorgang ein zusätzlicher Schutz für das Lichtwellenleiter-Kabel gegen zufälliges oder beabsichtigtes Eindringen von mechanischen Störstellen in die Verlegenut eingebracht wird. Solche Störstellen in der Trasse können zum Beispiel vorsätzlich durch Vandalismus oder zufällig bei Arbeiten im Verlegegrund auftreten. So wird beispielsweise beim Eindringen eines spitzen und sehr scharfkantigen Gegenstandes, wie zum Beispiel eines Schraubenziehers oder eines Meißels, das Durchdringen bis auf das Mikrokabel verhindert. Es erfolgt dabei eine elastisch-plastische Verformung des zähelastischen Abdeckprofils, das beispielsweise aus einem Metalldraht als Kern und einer elastischen Ummantelung aus Kunststoffmaterial besteht. Zusätzlich können Zwischenabdeckungen beim Verlegevorgang mit eingefügt werden, die direkt oberhalb des Mikrokabels verlaufen. In diese Zwischenabdeckungen können auch zusätzlich Drähte zur Verstärkung der mechanischen Festigkeit und Sensoren für abzurufende Informationen eingesetzt werden. Mit Hilfe solcher Sensoren kann beispielsweise das Auffinden und das Überwachen störungsfreier Funktion erfolgen. Der zähelastische Kern verhindert im wesentlichen die Durchtrennung mit einem scharfkantigen Gegenstand. Die Ummantelung hingegen aus Schaumstoff federt die Zusatzbelastung ab und verteilt die Druckbelastung über eine große Fläche hinweg, so dass das Mini- bzw. Mikrokabel nicht weiter verformt oder beschädigt wird. Zusätzlich ist hiermit auch eine einfache Hebehilfe für das Lichtwellenleiter-Kabel gegeben, da die Zugfestigkeit des Abdeckprofils ausreicht, das darüber liegende Füllmaterial aus der Verlegenut herauszutrennen. Das Abdeckprofil dient auch gleichzeitig als Niederhalter für das LichtwellenleiterKabel in der Verlegenut und kann bei Metalleinlagen gleichzeitig als Erdungsband fungieren.

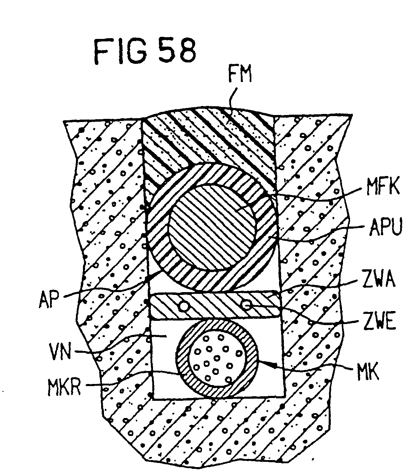

Die Figur 58 vermittelt eine im Querschnitt aufgezeigte Verlegenut VN, in dessen Nutgrund ein Mikrokabel MK eingelegt ist. Darüber ist nach oder mit dem Einlegen des Mikrokabels MK eine Zwischenabdeckung ZWA zusätzlich auf das darunter legende Mikrokabel MK eingebracht. Dadurch erfolgt zusätzlich eine Pufferung gegen mechanische Einwirkungen von oben, so daß auch gezielte Schläge mit einem Werkzeug oder ähnlichem spitzen Gegenstand das Mikrokabel MK nicht deformieren oder gar durchtrennen können. Diese Zwischenabdeckung ZWA kann gegebenenfalls mit Einlagen ZWE, zum Beispiel mit metallischen Drähten, oder mit Sensoren bestückt werden. Mit Hilfe solcher Sensoren können später sowohl die Trassenführung als auch eindringendes Wasser oder Störungen im Straßenbau geortet und die Störstellen eingemessen werden. Bei einer Zwischenabdeckung ZWA aus leitfähigem Material kann das Rohr MKR des Mikrokabels MK auch aus Kunststoff statt aus Metall gefertigt werden, wobei die entsprechenden Randbedingungen bezüglich der Zug- und Querdruckfestigkeit eingehalten werden müssen. Über dieser Zwischenabdeckung ZWA ist nun ebenfalls nach oder beim Einbringen des Mikrokabels das in erster Linie der Erfindung zugrunde liegende Abdeckprofil AP eingebracht. Dieses Abdeckprofil AP kann im Prinzip als Metalldraht-, Kunststoff-, Hanf- oder Sisalseil ausgebildet sein, wobei das verwendete Material die entsprechenden Eigenschaften aufweisen muß. Das heißt, daß das Abdeckprofil AP schwer durchtrennbar, mechanisch begrenzt verformbar und zähelastisch ausgebildet sein muß, was zum Beispiel durch Verseilung von Einzelelementen erreicht werden kann. Vorteilhaft ist jedoch, wenn ein derartiges Element als Kern MFK mit einer elastischen Umhüllung APU, vorzugsweise aus Schaumstoffmaterial, beschichtet wird, wobei der Durchmesser des gesamten Abdeckprofils AP der Breite der Verlegenut VN so entsprechen muß, daß mit ihm auch eine Klemmung in der Verlegenut erreicht wird. Der Kern MFK selbst muß dabei eine Dicke aufweisen, die zumindest dem Durchmesser des Mikrokabels entspricht, so daß das Abdeckprofil AP mit seinem Kern MFK dem Mikrokabel MK vollen Überdeckungsschutz bietet. Der Rest der Verlegenut VN wird nach oben hin zur Oberfläche des Verlegegrundes VG hin mit einem Füllmaterial, vorzugsweise mit Heißbitumen, aufgefüllt. Ein derartiges Abdeckprofil AP bietet somit einen weitgehenden Schutz gegen zufälliges oder beabsichtigtes Eindringen von zerstörenden Gegenständen in die Verlegenut VN, wobei der zähelastische Kern MFK die Durchdringung eines scharfkantigen Gegenstandes weitgehend verhindert. Dabei federt die Ummantelung APU aus elastischem Material die Belastung ab und verteilt die Druckbelastung über eine große Fläche hinweg. Das darunterliegende Mikrokabel MK wird nicht verformt oder beschädigt. Die in dieser Figur gezeigte Zwischenabdeckung ZWA muß jedoch nicht Bestandteil der Anordnung sein, wenn das Abdeckprofil AP die geforderten Bedingungen für sich aufweist. Außerdem kann das mechanisch feste Gebilde des Abdeckprofils AP auch als einfache Hebehilfe für das Mikrokabel MK gebraucht werden, da aufgrund der großen mechanischen Festigkeit mit ihm das darüber liegende Füllmaterial FM aus der Verlegenut VN bei Bedarf herausgezogen werden kann.

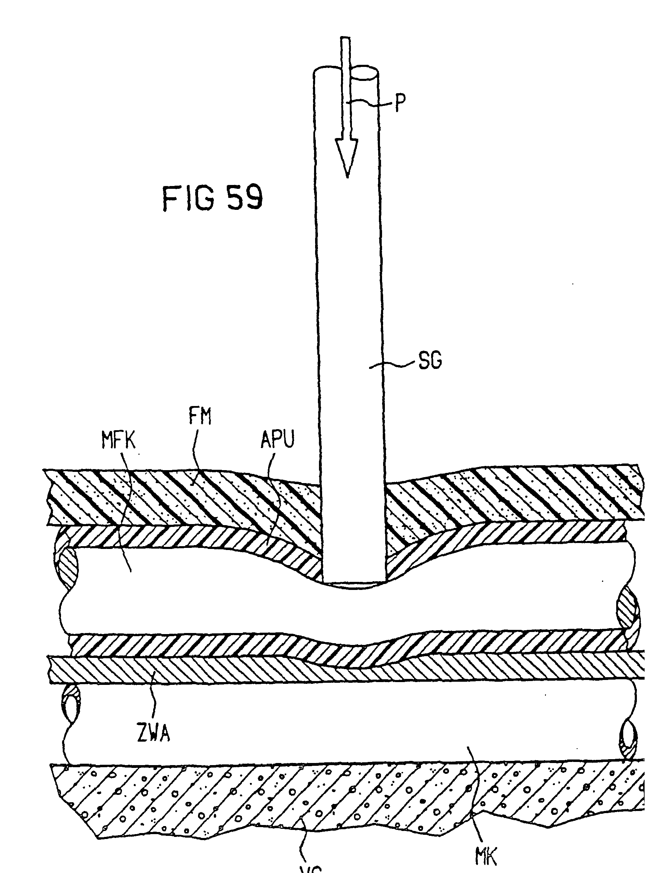

Die Figur 59 verdeutlicht eine angenommene mechanische Belastung durch einen spitzen Gegenstand SG, der mit einer Kraft P in die Verlegenut, die mit dem Füllmaterial FM aufgefüllt ist, eingetrieben wird. Bei diesem Vorgang wird das Füllmaterial FM verdrängt und der Gegenstand SG trifft auf die elastische Ummantelung APU des Abdeckprofils AP. Die Ummantelung APU wird dabei verformt oder gar durchtrennt, doch dann stößt der spitze Gegenstand SG auf den schwer durchtrennbaren Kern MFK des Abdeckprofils AP, wo er schließlich aufgehalten wird. Dabei wird die darunter liegende Seite der Ummantelung APU durch den auftretenden Druck verformt und es findet eine Druckverteilung statt. Das darunter liegende Mikrokabel MK, das in diesem Fall unterhalb der Zwischenabdeckung ZWA angeordnet ist, wird somit nicht beschädigt.

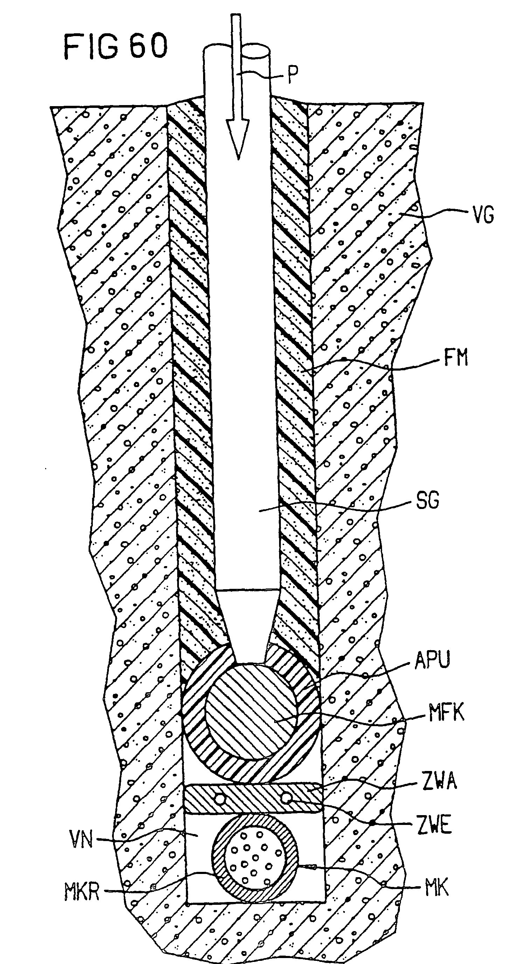

Die Figur 60 verdeutlicht den Vorgang nach Figur 59 in einer Querschnittsdarstellung. Dabei wird deutlich, daß der spitze Gegenstand SG beim Auftreffen auf das Abdeckprofil AP die Ummantelung APU verformt oder auch durchtrennt und dann durch den Kern MFK am weiteren Vordringen gehemmt wird. Im übrigen entsprechen die Verhältnisse den Ausführungen nach Figur 59.

**Patentansprüche**

1. Installation mit einem optischen Lichtwellenleiterkabel, umfassend:

    - eine Oberfläche (SO), in der eine Nut (19) mit einer vorgegebenen Breite festgelegt ist;
    - ein Kabel (1), das innerhalb der Nut (19) angeordnet ist und in dem wenigstens ein optischer Lichtwellenleiter (3) innerhalb einer Röhre (8) angeordnet ist; und
    - ein Füllmaterial (43, 44; FM), welches das Kabel (1) bedeckt und die Nut (19) wenigstens teilweise füllt, wobei das Füllmaterial wenigstens teilweise Material enthält, das nicht zuvor zur Bildung der Nut (19) ausgehoben wurde.

2. Installation mit einem optischen Lichtwellenleiterkabel nach Anspruch 1,
bei der das Kabel (19) einen Durchmesser von etwa 10 mm oder weniger aufweist.

3. Installation mit einem optischen Lichtwellenleiterkabel nach Anspruch 1 oder 2,
bei der in der Oberfläche (SO) die Nut (19) mit einer Breite von ungefähr 12 mm oder weniger festgelegt ist.

4. Installation mit einem optischen Lichtwellenleiterkabel nach einem der Ansprüche 1 bis 3,
bei der in der Oberfläche (SO) die Nut (19) so festlegt ist, dass sie eine vorgegebene Breite von ungefähr 7 mm oder weniger aufweist.

**5.** Installation mit einem optischen Lichtwellenleiterkabel nach einem der Ansprüche 1 bis 4, bei der das Kabel (1) einen Durchmesser von ungefähr 5,5 mm oder weniger aufweist.

**6.** Installation mit einem optischen Lichtwellenleiterkabel nach einem der Ansprüche 1 bis 5, bei der in der Oberfläche (SO) die Nut (19) so festgelegt ist, dass sie eine Tiefe von ungefähr 15 cm oder weniger aufweist.

**7.** Installation mit einem optischen Lichtwellenleiterkabel nach einem der Ansprüche 1 bis 6, bei der die Oberfläche (SO) eine feste Oberfläche ist, die aus Asphalt, Beton, einer Straßenoberfläche, einem Randstein oder einer Steinplatte gebildet ist.

**8.** Installation mit einem optischen Lichtwellenleiterkabel nach einem der Ansprüche 1 bis 7, die weiterhin ein Trennelement (ZT, FP) aufweist, das innerhalb der Nut (19) angeordnet ist und sich längs des Kabels (1) erstreckt, wobei das Füllmaterial (FM) auch das Trennelement bedeckt.

**9.** Installation mit einem optischen Lichtwellenleiterkabel nach einem der Ansprüche 1 bis 8, bei der das Füllmaterial (FM) aus Bitumen oder einem heiß schmelzenden Klebematerial gebildet ist.

**10.** Installation mit einem optischen Lichtwellenleiterkabel nach einem der Ansprüche 1 bis 9, die ein Niederhalteelement (NH) aufweist, welches in der Nut (19) angeordnet ist, um das Kabel (1) innerhalb der Nut (19) zu halten.

**11.** Installation mit einem optischen Lichtwellenleiterkabel nach einem der Ansprüche 1 bis 10, bei der die Röhre (8) ein Verhältnis von Wandstärke zu Außendurchmesser aufweist, welches zwischen ungefähr 0,2 bis ungefähr 0,05 liegt.

**12.** Installation mit einem optischen Lichtwellenleiterkabel nach einem der Ansprüche 1 bis 11, bei der die Röhre (8) als eine Kupferröhre ausgebildet ist und die Kupferröhre von einem Mantel umgeben ist.

**13.** Installation mit einem optischen Lichtwellenleiterkabel nach einem der Ansprüche 1 bis 12, bei der die Oberfläche eine Tragschicht (47), eine Binderschicht (46), welche auf der Tragschicht (47) angeordnet ist, und eine Deckschicht (45) aufweist, die auf der Binderschicht (46) angeordnet ist, und bei der die Nut (19) wenigstens in der Deckschicht (45) verläuft.

**14.** Installation mit einem optischen Lichtwellenleiterkabel nach einem der Ansprüche 1 bis 13, bei der die Oberfläche eine gepflasterte Oberfläche ist, die wenigstens eine Dehnungsfuge aufweist, die als die Nut dient.

**15.** Installation mit einem optischen Lichtwellenleiterkabel nach Anspruch 7, bei der das Trennelement (ZT, FP) aus Metall, Kunststoff oder einem Schaumstoff gebildet ist.

**16.** Installation mit einem optischen Lichtwellenleiterkabel nach Anspruch 7, bei der das Trennelement (ZT, FP) einen Kern umfasst, der von einer elastischen Umhüllung umgeben ist.

**17.** Installation mit einem optischen Lichtwellenleiterkabel nach Anspruch 7, bei der der Kern des Trennelements wenigstens so groß wie das Kabel ist.

**18.** Installation mit einem optischen Lichtwellenleiterkabel nach einem der Ansprüche 1 bis 17, bei der weiterhin eine Zwischenabdeckung (ZWA) vorgesehen ist, die innerhalb der Nut angeordnet ist und das Kabels bedeckt, wobei das Füllmaterial auch die Zwischenabdeckung (ZWA) bedeckt.

**19.** Installation mit einem optischen Lichtwellenleiterkabel nach Anspruch 18, bei der die Zwischenabdeckung (ZWA) wenigstens eine Einlage (ZWE) aufweist, die aus Drähten oder Sensoren ausgebildet ist.

**20.** Installation mit einem optischen Lichtwellenleiterkabel nach einem der Ansprüche 1 bis 19, bei der das Füllmaterial eine Markierung enthält.

**21.** Installation mit einem optischen Lichtwellenleiterkabel nach Anspruch 20, bei der die Markierung Glasfasern oder Metallfasern enthält.

**22.** Installation mit einem optischen Lichtwellenleiterkabel nach einem der Ansprüche 1 bis 21, die wenigstens einen Magnet (M) aufweist, der innerhalb der Nut angeordnet ist, wobei das Füllmaterial auch den wenigstens einen Magneten (M) bedeckt.

**23.** Installation mit einem optischen Lichtwellenleiterkabel nach einem der Ansprüche 1 bis 8, die darüber hinaus ein Element (VP) enthält, das innerhalb der Nut zwischen dem Kabel und dem Füllmaterial angeordnet ist, um das Kabel innerhalb der Nut zu halten.

**24.** Installation mit einem optischen Lichtwellenleiterkabel nach einem der Ansprüche 1 bis 23, die einen Schaumstoff (GU) umfasst, der wenigstens teilweise das Kabel umgibt, wobei das Füllmaterial auch den Schaumstoff (GU) bedeckt.

**25.** Installation mit einem optischen Lichtwellenleiterkabel nach einem der Ansprüche 1 bis 24, die ein leitfähiges Kabel umfasst (SK), das innerhalb der Nut angeordnet ist, wobei das Füllmaterial auch das leitfähige Kabel bedeckt.

**26.** Installation mit einem optischen Lichtwellenleiterkabel, umfassend:

- einen längs ausgedehnten Körper (VP), der als wenigstens eine sich längs erstreckende Röhre ausgebildet ist, die innerhalb einer Verlegenut angeordnet ist, welche in einer festen Oberfläche festgelegt ist;
- wenigstens ein optischer Lichtwellenleiter, der innerhalb der wenigstens einen sich längs erstreckenden Röhre angeordnet ist, die durch den längs ausgedehnten Körper (VP) festgelegt ist; und
- ein Füllmaterial (B), das den längs ausgedehnten Körper (VP) bedeckt und wenigstens teilweise die Verlegenut füllt.

**27.** Installation mit einem optischen Lichtwellenleiterkabel nach Anspruch 26, wobei der längs ausgedehnte Körper (VP) so bemessen ist, dass der innerhalb der Verlegenut, die eine Breite von ungefähr 12 mm oder weniger aufweist, aufgenommen wird.

**28.** Installation mit einem optischen Lichtwellenleiterkabel nach Anspruch 26, wobei der längs ausgedehnte Körper (VP) so dimensioniert ist, dass er innerhalb der Verlegenut, die eine Breite von ungefähr 7 mm oder weniger aufweist, aufgenommen wird.

**29.** Installation mit einem optischen Lichtwellenleiterkabel nach einem der Ansprüche 26 bis 28, bei der der längs ausgedehnte Körper (VP) eine Vielzahl von Widerhaken (WH) aufweist, um in Wände, durch die die Verlegenut festgelegt ist, einzugreifen.

**30.** Installation mit einem optischen Lichtwellenleiterkabel nach Anspruch 26, bei der der längs ausgedehnte Körper (VP) durch das Füllmaterial umgeben ist.

**31.** Installation mit einem optischen Lichtwellenleiterkabel nach Anspruch 26, bei der der längs ausgedehnte Körper (VP) einen in der Röhre verlaufenden Längsschlitz (VPS) aufweist.

**32.** Installation mit einem optischen Lichtwellenleiterkabel nach Anspruch 31, bei der ein Kabel (MK) in die Röhre über den Längsschlitz (VPS) eingebracht ist und bei der das Kabel (MK) seinerseits eine Röhre aufweist, innerhalb der der wenigstens eine Lichtwellenleiter angeordnet ist.

**33.** Installation mit einem optischen Lichtwellenleiterkabel nach einem der Ansprüche 26 bis 32, bei der die feste Oberfläche aus Asphalt, Beton, einer Straßenoberfläche, einem Randstein oder einer Steinplatte gebildet ist.

**34.** Installation mit einem optischen Lichtwellenleiterkabel nach einem der Ansprüche 26 bis 32, bei der die feste Oberfläche eine gepflasterte Oberfläche ist.

**35.** Installation mit einem optischen Lichtwellenleiterkabel nach einem der Ansprüche 26 bis 34, bei der in der festen Oberfläche die Verlegenut mit einer Tiefe von ungefähr 15 cm oder weniger festlegt ist.

**36.** Installation mit einem optischen Lichtwellenleiterkabel nach einem der Ansprüche 26 bis 35, bei der die Röhre als eine Kupferröhre ausgebildet ist.

FIG 1

FIG 2

FIG 5

FIG 3

FIG 4

FIG 6

FIG 8

FIG 9

FIG 7

FIG 10

FIG 11

FIG 12

FIG 13

FIG 14

FIG.15

FIG 16

SO    VB

VN

MK

FIG 17

MS    SO

TN1

BS

FIG 18

TS1   TS2   G

DR

AS

VE

FIG 19

TS1

RA

DR

FIG 20

TS1

SA

DR

Z

FIG 21

TS1

DR

B

# FIG 22

**FIG 23**

**FIG 24**

## FIG 25

## FIG 26

## FIG 27

FIG 28

RL

IS

MKR

MK

VN

VG

FIG 29

NH

NHS

IS

MR

MK

VG

FIG 30

MK

IS

ZS

**FIG 31**

**FIG 32**

**FIG 33**

FIG 34

D          OS          VN

VG

MK

FIG 35

MN          MS          M          NH          VN

N
S

S
N

N
S

VG                    MK

FIG 36

FIG 37

FIG 38

FIG 39

FIG 40

FIG 41

D

IS

I

NH

I

VN

MK

NH

VG

FIG 42

TF

C

NH

## FIG 43

## FIG 44

## FIG 45

EP 1 619 767 A1

**FIG 46**

FIG 47

EP 1 619 767 A1

**FIG 48**

SO FM

VN

VG

GU

MK

**FIG 49**

**FIG 50**

**FIG 51**

## FIG 52

## FIG 53

FIG 54

ER

VPS          MK

FK

FK          VP

WH

FIG 55          B

MK

FK

VN

FK          VG

VP

**FIG 56**

**FIG 57**

# FIG 58

FIG 59

FIG 60

**Europäisches Patentamt**

**EUROPÄISCHER RECHERCHENBERICHT**

Nummer der Anmeldung

EP 05 01 4845

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PATENT ABSTRACTS OF JAPAN<br>Bd. 007, Nr. 042 (P-177),<br>19. Februar 1983 (1983-02-19)<br>& JP 57 195206 A (NIPPON DENKI KK),<br>30. November 1982 (1982-11-30)<br>* Zusammenfassung *<br>----- | 1-36 | H02G1/06<br>G02B6/44 |
| X | US 4 812 078 A (RIVARD ET AL)<br>14. März 1989 (1989-03-14)<br>* Abbildung 3 *<br>----- | 1,26 | |
| X | US 4 437 789 A (KASIEWICZ ET AL)<br>20. März 1984 (1984-03-20)<br>* Zusammenfassung *<br>----- | 1,20,21 | |
| X | US 4 063 429 A (WILSON ET AL)<br>20. Dezember 1977 (1977-12-20)<br>* Zusammenfassung *<br>----- | 1,21,24 | |
| A,P | GB 2 295 564 A (JOHN EDWIN * OAKES)<br>5. Juni 1996 (1996-06-05)<br>----- | | RECHERCHIERTE SACHGEBIETE (IPC) |
| A | US 4 896 997 A (GAYLIN ET AL)<br>30. Januar 1990 (1990-01-30)<br>----- | | H02G<br>G02B |
| A | WO 92/13227 A (TAMAQUA CABLE PRODUCTS CORPORATION) 6. August 1992 (1992-08-06)<br>----- | | |

Der vorliegende Recherchenbericht wurde für alle Patentansprüche erstellt

| Recherchenort | Abschlußdatum der Recherche | Prüfer |
|---|---|---|
| Den Haag | 7. November 2005 | Verbandt, Y |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 01 4845

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-11-2005

| Im Recherchenbericht angeführtes Patentdokument | | Datum der Veröffentlichung | Mitglied(er) der Patentfamilie | | Datum der Veröffentlichung |
|---|---|---|---|---|---|
| JP 57195206 | A | 30-11-1982 | KEINE | | |
| US 4812078 | A | 14-03-1989 | DE | 3768868 D1 | 02-05-1991 |
| | | | EP | 0251876 A1 | 07-01-1988 |
| | | | FR | 2600689 A1 | 31-12-1987 |
| US 4437789 | A | 20-03-1984 | CA | 1188112 A1 | 04-06-1985 |
| US 4063429 | A | 20-12-1977 | AU | 7411274 A | 15-04-1976 |
| | | | CA | 995017 A1 | 17-08-1976 |
| GB 2295564 | A | 05-06-1996 | AU | 4308996 A | 17-06-1996 |
| | | | WO | 9616229 A1 | 30-05-1996 |
| US 4896997 | A | 30-01-1990 | CA | 1230744 A1 | 29-12-1987 |
| WO 9213227 | A | 06-08-1992 | MX | 9200334 A1 | 01-09-1992 |

EPO FORM P0461

Für nähere Einzelheiten zu diesem Anhang : siehe Amtsblatt des Europäischen Patentamts, Nr.12/82